# EUROPÄISCHE PATENTSCHRIFT

(11) **EP 3 586 019 B1**
(45) Veröffentlichungstag und Bekanntmachung des Hinweises auf die Patenterteilung: **09.06.2021**
(21) Anmeldenummer: 18708944.6
(22) Anmeldetag: 23.02.2018
(51) Int. Cl.: F16C 27/02, F16C 35/02, B62D 1/16, F16D 1/08

(54) **GLEITLAGER FÜR EINE LENKSPINDEL UND LENKSÄULE FÜR EIN KRAFTFAHRZEUG**
SLIDE BEARING FOR A STEERING SHAFT AND STEERING COLUMN FOR A VEHICLE
PALIER GLISSANT POUR UN ARBRE DE DIRECTION ET COLONNE DE DIRECTION POUR UN VEHICULE

(30) Priorität: 27.02.2017 DE 102017203101; 08.08.2017 DE 102017213807
(43) Veröffentlichungstag der Anmeldung: 01.01.2020
(73) Patentinhaber: thyssenkrupp Presta AG, 9492 Eschen (LI); thyssenkrupp AG, 45143 Essen (DE)
(72) Erfinder: DOMIG, Markus, 6781 Bartholomäberg (AT); RAICH, Thomas, 6773 Vandans (AT)
(74) Vertreter: thyssenkrupp Intellectual Property GmbH
(86) Internationale Anmeldenummer: PCT/EP2018/054584
(87) Internationale Veröffentlichungsnummer: WO 2018/154079

(56) Entgegenhaltungen:
- EP-A1- 1 652 748
- DE-A1- 19 945 164
- DE-B3-102012 104 644
- FR-A1- 2 661 959
- FR-A1- 2 674 646
- FR-A1- 2 685 415
- FR-A1- 2 714 126

## Beschreibung

### Stand der Technik

Die Erfindung betrifft ein Gleitlager für eine Lenkspindel einer Lenksäule für ein Kraftfahrzeug, mit einem Innenring, der eine axial durchgehende Lageröffnung zur gleitenden Aufnahme der Lenkspindel aufweist, wobei mindestens ein Vorspannelement derart angeordnet ist, dass es auf den Innenring eine Vorspannkraft ausübt, zur Verspannung des Innenrings auf der Lenkspindel. Weiterhin bezieht sich die Erfindung auf eine Lenksäule mit einem derartigen Gleitlager.

Lenksäulen für Kraftfahrzeuge weisen eine Lenkspindel, welche auch als Lenkwelle bezeichnet werden kann, auf, an deren bezüglich der Fahrtrichtung hinterem Ende das Lenkrad angebracht ist und die in einer Manteleinheit, auch als Führungskasten bezeichnet, drehbar gelagert und an der Fahrzeugkarosserie gehaltert ist. Zur Einstellung der Lenkradposition ist es weiterhin bekannt, die Lenkspindel in Längsrichtung dadurch verstellbar zu gestalten, dass sie aus zwei in Richtung ihrer Längsachse teleskopierbaren, drehmomentschlüssig miteinander verbundenen Wellenteilen gebildet wird, beispielsweise durch axial ineinander gesteckte Profilwellen. Das relativ zur Manteleinheit teleskopierbar in Längsrichtung verstellbare Wellenteil ist in einem inneren Mantelrohr drehbar gelagert, welches seinerseits in der besagten Manteleinheit in Richtung der Achse teleskopierbar aufgenommen ist. Mit dem anderen Wellenteil, welches in Richtung der Achse relativ zur Manteleinheit fest positioniert ist, ist die Lenkspindel in dieser Manteleinheit drehbar gelagert und abgestützt.

Um eine leichtgängige Übertragung des eingebrachten Lenkmoments und eine radiale Abstützung in jeder Verstellposition zu gewährleisten, ist die Lenkspindel über ihre Länge mehrfach gelagert. Insbesondere ist es im Stand der Technik bekannt, beispielsweise aus der DE 10 2012 105 151 B3, die Lenkspindel an dem verstellbaren Wellenteil in zwei axial beabstandeten Wälzlagern in dem Mantelrohr zu lagern, und an dem axial feststehenden Wellenteil in einem zum ersten Wellenteil axial beabstandeten Gleitlager in der Manteleinheit zu lagern.

Das Gleitlager, welches als drittes Lager auf derselben Achse eine Überbestimmung darstellt, dient in erster Linie zur nachgiebigen Stützung und Positionierung der Lenkspindel in der Manteleinheit, und wird durch Lagerkräfte, die hauptsächlich von den genannten Wälzlagern aufgenommen werden, nur relativ gering beansprucht. Daher ist die Lenkspindel im genannten Stand der Technik gleitend drehbar in einem Innenring gelagert, der seinerseits zur Anbringung in der Manteleinheit in einem Außenring angeordnet ist. Dabei wird in dem bekannten Beispiel vorgeschlagen, den Innenring aus einem elastischen Kunststoff zu fertigen, und zusätzlich durch einen radialen Schlitz radial zu teilen, so dass zwischen den aufeinander gleitenden Lagerflächen auf der Innenseite der Lageröffnung und der Außenseite der Lenkspindel geringe radiale Kräfte wirken, um eine möglichst geringe Gleitreibung zu erreichen. Um die Lagerreibung weiter zu verringern, wird weiterhin vorgeschlagen, Kunststoffe mit guten Gleiteigenschaften einzusetzen oder die Oberflächen reibungsmindernd auszugestalten. Durch diese Maßnahmen wird eine besonders leichtgängige Gleitlagerung mit geringem Reibungs- oder Dämpfungsmoment realisiert.

Eine zu leichtgängige Lagerung, die einem manuellen Lenkeingriff aufgrund der in modernen Kraftfahrzeugen in der Regel vorhandenen Lenkunterstützung keinen merklichen Widerstand entgegensetzt, erzeugt jedoch ein unangenehmes Lenkgefühl. Für eine angenehme und als wertig empfundene Haptik wird daher eine Dämpfung angestrebt, bei welcher einer Drehung der Lenkspindel ein definiertes, gleichmäßig sanft gleitendes Bremsmoment entgegenwirkt. Dies ist jedoch mittels der bekannten, auf geringe Lagerreibung optimierten Lagerung, nicht darstellbar.

Aus der FR 2 685 415 A1 ist ein Gleitlager der eingangs genannten Art bekannt. Dieses weist ein radial gegen die Lenkspindel vorspannbares Vorspannelement auf. Nachteilig daran ist, dass die Verspannung des Innenrings umständlich ist, und das Bremsmoment nicht hinreichend gleichmäßig und genau vorgegeben werden kann.

Angesichts der vorangehend erläuterten Problematik ist es eine Aufgabe der vorliegenden Erfindung, ein Gleitlager anzugeben, durch das ein definiertes, gleichmäßiges Bremsmoment vorgegeben werden kann.

### Darstellung der Erfindung

Diese Aufgabe wird gelöst durch ein Gleitlager mit den Merkmalen des Anspruchs 1 und eine Lenksäule gemäß Anspruch 9. Vorteilhafte Weiterbildungen ergeben sich aus den Unteransprüchen.

Erfindungsgemäß wird für ein gattungsgemäßes Gleitlager vorgeschlagen, dass mindestens ein Vorspannelement derart angeordnet ist, dass es auf den Innenring eine Vorspannkraft ausübt, zur Verspannung des Innenrings auf der Lenkspindel, wobei vorgesehen ist, dass der Innenring einen radialen Schlitz zwischen einander in Umfangsrichtung gegenüberliegenden Umfangsenden aufweist, an denen das Vorspannelement angreift und die Vorspannkraft in Umfangsrichtung ausübt. Bevorzugt ist das mindestens eine Vorspannelement derart angeordnet, dass es auf den Innenring eine Vorspannkraft in Richtung einer Verkleinerung der Lageröffnung zur Verspannung des Innenrings auf der Lenkspindel ausübt.

Das erfindungsgemäße Gleitlager weist ein Vorspannelement auf, das mit dem Innenring zusammenwirkt. Das Vorspannelement weist ein Krafterzeugungsmittel auf, welches als Vorspannkraft eine statische Kraft erzeugt, die dauerhaft auf den Innenring einwirkt. Der Innenring wird derart mit der Vorspannkraft beaufschlagt, dass die Innenwandung der Lageröffnung, welche die Lagerfläche des Innenrings bildet, in Richtung einer Verkleinerung der Lageröffnung belastet wird. Die Aufbringung einer definierten Vorspannkraft auf den Innenring mittels des erfindungsgemäßen Vorspannelements kann somit zur Verspannung des Innenrings auf der in der Lageröffnung gelagerten Lenkspindel dienen, sodass die Innenumfangsfläche und/oder die Außenumfangsfläche des Innenrings reduziert werden kann . Dabei wird die Lagerfläche des Innenrings mit einer definierten Vorspannkraft gegen die Lagerfläche einer in dem Innenring gelagerten Lenkspindel angedrückt. Die Größe der Vorspannkraft bestimmt die zwischen den aufeinander gleitenden Lagerflächen auftretende Reibungskraft, welche einer Drehung der Lenkspindel in dem Innenring des Gleitlagers bei manueller Einbringung eines Lenkmoments als Dämpfungs- oder Bremsmoment entgegenwirkt. Durch das Vorspannelement kann die Lagerreibung des Gleitlagers einfach durch Erhöhung der Vorspannkraft gezielt erhöht werden, um bei einem Lenkeingriff ein spürbares, als angenehm empfundenes Gegenmoment zu erzeugen.

Dank der Erfindung kann ein in einer Lenksäule vorhandenes Bauelement, nämlich das Gleitlager, mit einer zusätzlichen Funktion versehen werden, nämlich einer Dämpfungs- oder Bremswirkung, welche eine Optimierung der Haptik ermöglicht. Die zusätzliche Funktionalität kann mit geringem Aufwand realisiert werden.

Vorteilhaft bei der Erfindung ist, dass die Größe der Vorspannkraft durch das Vorspannelement unabhängig vom Innenring definiert vorgegeben werden kann. Auf diese Weise ist es möglich, beispielsweise den Innenring aus einem Material mit geeigneten Lager- und Gleiteigenschaften und guter Langzeitstabilität einzusetzen, auch wenn die Elastizität und mechanische Stabilität zu gering ist, um eine ausreichend hohe Lagerreibung vorzugeben, die zur Erzeugung der optimalen Dämpfungs- oder Bremswirkung erforderlich ist. Durch die Ausgestaltung des Vorspannelements kann eine an den jeweiligen Einsatz angepasste Vorspannkraft vorgegeben werden, so dass mit einem Innenring unterschiedliche haptische Eigenschaften einer Lenksäule darstellbar sind.

Vorzugsweise ist das Vorspannelement als Federelement ausgebildet, bevorzugt aus Federstahl. Durch eine entsprechende Einspannung oder Verformung des Federelements kann die dabei als Gegenkraft auftretende elastische Federkraft erfindungsgemäß als statische Vorspannkraft genutzt und in den Innenring eingeleitet werden. Durch die Beaufschlagung mit der Federkraft wird die Lagerfläche auf der Innenseite der Lageröffnung dauerhaft radial nach innen belastet, und kann so auf der Lenkspindel zur Erzeugung eines definierten Reibmoments verspannt werden. Aus Federstahl kann ein Federelement mit kleinen Abmessungen zur Verfügung gestellt werden, mit dem eine hinreichend hohe Vorspannkraft bereitgestellt werden kann. Dadurch kann eine einfache Integration in ein Gleitlager erfolgen. Ein weiterer Vorteil ist, dass Federstahl seine elastischen Eigenschaften langfristig beibehält und eine gleichbleibende Vorspannkraft und entsprechend ein gleichmäßiges Dämpfungs- und Gleitverhalten über die gesamte Lebensdauer der Lenksäule gewährleistet.

Der Innenring kann aus Kunststoff ausgebildet sein, bevorzugt als Kunststoff-Spritzgussteil. Die Verwendung von Kunststoffen für den Innenring des Gleitlagers hat den Vorteil, dass zusammen mit der üblicherweise aus Stahl gefertigten Lenkspindel eine langfristig verschleißarme und zuverlässige Lagerpaarung möglich ist. Durch die Wahl geeigneter Kunststoffe können die angestrebten Gleiteigenschaften in weiten Grenzen vorgegeben werden, um beispielsweise unerwünschte Haftreibungseffekte ("stick-slip") zu verringern, oder die Reibung durch Zusatz von Additiven gezielt zu erhöhen oder zu verringern. Die Fertigung als Kunststoff-Spritzgussteil aus thermoplastischem Elastomer kann in den vielfältigsten, an den jeweiligen Einsatz optimal angepassten Formgebungen rationell erfolgen. Durch das erfindungsgemäße Vorspannelement können die für die angestrebte Dämpfungs- oder Bremswirkung erforderlichen Reibungskräfte weitgehend unabhängig von den elastischen Eigenschaften des Kunststoffs eingestellt werden. Beispielsweise kann ein reibungsarm gleitender, mechanisch widerstandsfähiger, aber biegeweicher oder wenig elastischer Kunststoff durch das erfindungsgemäß zusätzliche Vorspannelement mit entsprechend hoher Vorspannkraft an die Lagerfläche der Lenkspindel radial angepresst werden, um eine definierte Lagerreibung zu erzeugen, welche dem angestrebten Brems- oder Dämpfungsmoment entspricht.

Die Erfindung sieht vor, dass der Innenring einen radialen Schlitz aufweist wobei das Vorspannelement den Schlitz überbrückt und in Umfangsrichtung zusammenzieht. Bevorzugt ist das mindestens eine Vorspannelement derart angeordnet, dass es auf den Innenring eine Vorspannkraft in Richtung einer Verkleinerung der Lageröffnung zur Verspannung des Innenrings auf der Lenkspindel ausübt. Der Innenring ist in dieser Ausführung geteilt, und dadurch im Wesentlichen C-förmig offen oder U-förmig ausgebildet. Eine derartige Bauform ist aus dem eingangs genannten Stand der Technik im Prinzip bekannt und hat den Vorteil einer leichten Montierbarkeit auf der Lenkspindel. Allerdings kann der bekannte Innenring lediglich mit sehr geringer radialer Kraft auf der Lagerfläche der Lenkspindel anliegen, so dass die Vorgabe eines definierten, hinreichend hohen Dämpfungs- oder Bremsmoments nicht möglich ist. Erfindungsgemäß ist das Vorspannelement derart an dem offenen Innenring angebracht, dass es die einander im Schlitz in Umfangsrichtung gegenüberliegenden, freien Enden des Innenrings in Umfangsrichtung gegeneinander zusammenzieht. Anders ausgedrückt wirkt die Vorspannkraft auf eine Verringerung der Schlitzbreite hin. Auf diese Weise wird der Innenring nach Art einer Rohrschelle zusammengezogen, die von dem Vorspannelement in Umfangsrichtung in den Innenring eingeleitete Vorspannkraft wird in eine radial nach innen gerichtete Kraft umgelenkt, welche die Lageröffnung zusammenzieht, also komprimiert. Ein Vorteil ist die große Kraftübersetzung, so dass eine relativ kleine von dem Vorspannelement in Umfangsrichtung ausgeübte Vorspannkraft in eine relativ große radiale Kraft umgesetzt wird, mit der die Lageröffnung des Innenrings auf der Lenkspindel verspannbar ist.

Ein weiterer Vorteil ist, dass durch das Vorspannelement der durch den Schlitz zunächst offene Innenring in Umfangsrichtung geschlossen wird, so dass eine geschlossene ringförmige Struktur gebildet wird, welche die Steifigkeit der aus der Lenkspindel zusammen mit dem Innenring gebildeten Lageranordnung gegenüber dem Stand der Technik erhöht. Die erhöhte Steifigkeit und die daraus resultierende höhere Eigenfrequenz verbessern die mechanischen Betriebseigenschaften einer mit einem derartigen Gleitlager ausgestatteten Lenksäule.

Ein C-förmiger oder U-förmiger Innenring mit einem radial durchgehenden Schlitz kann mit geringem Aufwand als Kunststoff-Spritzgussteil gefertigt werden.

Bei der vorgenannten Ausführung kann vorgesehen sein, dass das Vorspannelement klammerartig ausgebildet ist und in axialer Richtung mit dem Innenring verbunden ist. Das Vorspannelement kann U- oder C-förmig oder bügelförmig als Federklammer oder Federclip ausgebildet sein, welches besonders rationell und mit den geforderten elastischen Eigenschaften als Biege- oder Biege-Stanz-Teil aus Federstahldraht oder -blech hergestellt werden kann. In der klammerartigen Ausbildung, beispielsweise in der U-Form, kann das Vorspannelement Schenkel aufweisen, die in axialer Richtung im Innenring ausgebildete Ausnehmungen eingreifen. Die Ausnehmungen können beispielsweise Öffnungen sein, die in axialer Richtung im Bereich der am Schlitz einander gegenüberliegenden Enden in dem Innenring ausgebildet sind, und in die jeweils ein Schenkel einer U- oder C-förmigen Federklammer in axialer Richtung eingesetzt wird, so dass der Bogen der Federklammer den Schlitz überspannt, und ein Formschluss in Umfangsrichtung gebildet wird. Dadurch wird der Innenring axial stirnseitig durch das als Federklammer ausgebildete Vorspannelement geschlossen, und die Schenkel üben die Vorspannkraft auf den Innenring aus, indem sie die im Schlitz gegenüberliegenden Enden in Umfangsrichtung gegeneinander zusammenziehen. Dadurch wird die Lageröffnung komprimiert.

Bezüglich der Montage ist vorteilhaft, dass der zunächst noch offene, geschlitzte Innenring unter elastischer Aufbiegung leicht in axialer Richtung auf eine Lenkspindel aufgesetzt werden kann, und die eigentliche Verspannung erst durch axiales Einsetzen der Federklammer in den Innenring erfolgt. Alternativ ist es möglich, das Vorspannelement zuerst einzusetzen, und dann den Innenring auf der Lenkspindel anzubringen.

Ein weiterer Vorteil der klammerartigen Ausbildung der Vorspannelements ist neben der kleinen Bauform und der leichten Integrierbarkeit in ein bestehendes Lagerkonzept eines Gleitlagers, dass durch die Materialstärke des Federstahldrahts oder -blechs die elastischen Eigenschaften und die Größe der Vorspannkraft mit geringem Aufwand verändert und angepasst werden können.

Alternativ ist es denkbar, andere Befestigungsmittel vorzusehen, bevorzugt durch miteinander korrespondierende Formschlusselemente an dem Innenring und dem Vorspannelement.

Es kann vorgesehen sein, dass der Innenring von einem Außenring umgeben ist. Der Innenring kann dabei im Wesentlichen koaxial in einer Aufnahmeöffnung innerhalb des Außenrings angeordnet und darin gehalten sein. Der Außenring kann in der Manteleinheit einer Lenksäule montiert sein.

Eine Weiterbildung kann dadurch erfolgen, dass zwischen dem Innenring und dem Außenring mindestens ein radiales Ausgleichselement angeordnet ist. Dadurch, dass das Ausgleichselement in radialer Richtung elastisch federnd ausgestaltet ist, kann durch ein oder mehrere Ausgleichelemente eine radial nachgiebige Halterung oder Aufhängung des Innenrings in dem Außenring realisiert werden, so dass sich der gesamte Innenring innerhalb des Außenrings radial verlagern kann, zum Ausgleich einer Deachsierung zwischen der Lenkspindelachse und der Lagerachse, die aufgrund der eingangs beschriebenen Überbestimmung bei einer Anordnung mit drei Lagern auftreten kann. Als Ausgleichselemente können beispielsweise nachgiebige Zwischenstücke aus elastischem Material radial zwischen Innen- und Außenring angeordnet sein.

Als Ausgleichselement kann ein in radialer Richtung zwischen Innen- und Außenring wirksames Federelement eingesetzt werden, beispielsweise eine Elastomer-Feder aus einem elastisch verformbaren Profil aus gummiartigem Material. Ein Ausgleichselement kann auch dadurch bereitgestellt werden, dass der Innenring mit einem elastischeren Material umspritzt ist. Dazu kann der Innenring im Zweikomponenten-Spritzguss auf seinem Außenumfang umlaufend oder abschnittweise mit einem nachgiebigen, weichen thermoplastischen Elastomermaterial ummantelt werden.

Die Erfindung betrifft weiterhin ein Gleitlager für eine Lenkspindel einer Lenksäule für ein Kraftfahrzeug, mit einem Innenring, der zur gleitenden Aufnahme der Lenkspindel eine axial durchgehende Lageröffnung aufweist. Weiterhin bezieht sich die Erfindung auf eine Lenksäule mit einem derartigen Gleitlager.

Lenksäulen für Kraftfahrzeuge weisen eine Lenkspindel, welche auch als Lenkwelle bezeichnet werden kann, auf, an deren bezüglich der Fahrtrichtung hinterem Ende das Lenkrad angebracht ist und die in einer Manteleinheit, auch als Führungskasten bezeichnet, drehbar gelagert und an der Fahrzeugkarosserie gehaltert ist. Zur Einstellung der Lenkradposition ist es weiterhin bekannt, die Lenkspindel in Längsrichtung dadurch verstellbar zu gestalten, dass sie aus zwei in Richtung ihrer Längsachse teleskopierbaren, drehmomentschlüssig miteinander verbundenen Wellenteilen gebildet wird, beispielsweise durch axial ineinander gesteckte Profilwellen. Das relativ zur Manteleinheit teleskopierbar in Längsrichtung verstellbare Wellenteil ist in einem inneren Mantelrohr drehbar gelagert, welches seinerseits in der besagten Manteleinheit in Richtung der Achse teleskopierbar aufgenommen ist. Mit dem anderen Wellenteil, welches in Richtung der Achse relativ zur Manteleinheit fest positioniert ist, ist die Lenkspindel in dieser Manteleinheit drehbar gelagert und abgestützt.

Um eine leichtgängige Übertragung des eingebrachten Lenkmoments und eine radiale Abstützung in jeder Verstellposition zu gewährleisten, ist die Lenkspindel über ihre Länge mehrfach gelagert. Insbesondere ist es im Stand der Technik bekannt, beispielsweise aus der DE 10 2012 105 151 B3, die Lenkspindel an dem verstellbaren Wellenteil in zwei axial beabstandeten Wälzlagern in dem Mantelrohr zu lagern, und an dem axial feststehenden Wellenteil in einem zum ersten Wellenteil axial beabstandeten Gleitlager in der Manteleinheit zu lagern.

Das Gleitlager, welches als drittes Lager auf derselben Achse eine Überbestimmung darstellt, dient in erster Linie zur nachgiebigen Stützung und Positionierung der Lenkspindel in der Manteleinheit, und wird durch Lagerkräfte, die hauptsächlich von den genannten Wälzlagern aufgenommen werden, nur relativ gering beansprucht. Daher ist die Lenkspindel im genannten Stand der Technik gleitend drehbar in einem Innenring gelagert, der seinerseits zur Anbringung in der Manteleinheit in einem Außenring angeordnet ist. Dabei wird in dem bekannten Beispiel vorgeschlagen, den Innenring aus einem elastischen Kunststoff zu fertigen, und zusätzlich durch einen radialen Schlitz radial zu teilen, so dass zwischen den aufeinander gleitenden Lagerflächen auf der Innenseite der Lageröffnung und der Außenseite der Lenkspindel geringe radiale Kräfte wirken, um eine möglichst geringe Gleitreibung zu erreichen. Um die Lagerreibung weiter zu verringern, wird weiterhin vorgeschlagen, Kunststoffe mit guten Gleiteigenschaften einzusetzen oder die Oberflächen reibungsmindernd auszugestalten. Durch diese Maßnahmen wird eine besonders leichtgängige Gleitlagerung mit geringem Reibungs- oder Dämpfungsmoment realisiert.

Eine zu leichtgängige Lagerung, die einem manuellen Lenkeingriff aufgrund der in modernen Kraftfahrzeugen in der Regel vorhandenen Lenkunterstützung keinen merklichen Widerstand entgegensetzt, erzeugt jedoch ein unangenehmes Lenkgefühl. Für eine angenehme und als wertig empfundene Haptik wird daher eine Dämpfung angestrebt, bei welcher einer Drehung der Lenkspindel ein definiertes, gleichmäßig sanft gleitendes Bremsmoment entgegenwirkt. Dies ist jedoch mittels der bekannten, auf geringe Lagerreibung optimierten Lagerung, nicht darstellbar.

Angesichts der vorangehend erläuterten Problematik ist es eine Aufgabe der vorliegenden Erfindung, ein Gleitlager anzugeben, durch das ein definiertes, gleichmäßiges Bremsmoment vorgegeben werden kann, und welches für unterschiedliche Anforderungen einfach verändert werden kann.

### Darstellung der Erfindung

Diese Aufgabe wird gelöst durch ein Gleitlager mit den Merkmalen der Ansprüche 1 und 11 und eine Lenksäugemäß Ansprüchen 9 und 20
Vorteilhafte Weiterbildungen ergeben sich aus den jeweiligen Unteransprüchen.

Erfindungsgemäß wird für ein gattungsgemäßes Gleitlager für eine Lenkspindel einer Lenksäule für ein Kraftfahrzeug, mit einem Innenring, der zur gleitenden Aufnahme der Lenkspindel eine axial durchgehende Lageröffnung aufweist, vorgeschlagen, dass mit dem Innenring eine Vorspannvorrichtung wirkverbunden ist, die auf den Innenring eine die Lageröffnung zusammenzwängende Vorspannkraft ausübt, zur Verspannung des Innenrings auf der Lenkspindel, wobei die Vorspannvorrichtung in einer Ausführungsform eine Stelleinrichtung aufweist zur veränderbaren Vorgabe der Vorspannkraft.

Das erfindungsgemäße Gleitlager weist eine Vorspannvorrichtung auf, das mit dem Innenring zusammenwirkt. Die Vorspannvorrichtung weist mindestens ein Krafterzeugungsmittel auf, welches eine Vorspannkraft erzeugt, die auf den Innenring in Richtung einer Verkleinerung des Lagerquerschnitts der Lageröffnung einwirkt und dadurch den Innenring dadurch zusammenzwängt. Die Vorspannkraft setzt derart an dem Innenring an, dass die Innenwandung der Lageröffnung, welche die Lagerfläche des Innenrings bildet, in Richtung einer Verkleinerung der Lageröffnung belastet wird. Durch die Aufbringung einer definierten Vorspannkraft auf den Innenring mittels des erfindungsgemäßen Vorspannelements kann somit eine Verspannung des Innenrings auf der in der Lageröffnung gelagerten Lenkspindel erfolgen.

Die Verspannung des Innenrings auf der Lenkspindel bewirkt, dass die Lagerfläche des Innenrings mit der definierten Vorspannkraft gegen die Lagerfläche einer in dem Innenring gelagerten Lenkspindel angedrückt wird. Die Größe der Vorspannkraft bestimmt die Größe der zwischen den aufeinander gleitenden Lagerflächen auftretenden Reibungskraft, welche einer Drehung der Lenkspindel in dem Innenring des Gleitlagers bei manueller Einbringung eines Lenkmoments als Dämpfungs- oder Bremsmoment entgegenwirkt. Durch das Vorspannelement kann die Lagerreibung des Gleitlagers einfach durch Vorgabe der Vorspannkraft gezielt vorgegeben werden, um bei einem Lenkeingriff ein spürbares, als angenehm empfundenes Gegenmoment zu erzeugen.

Die Einstelleinrichtung ermöglicht die Veränderung der von dem Krafterzeugungsmittel in den Innenring eingebrachten Vorspannkraft. Es wird eine einstellbare Vorspannvorrichtung mit veränderbarer Vorspannkraft realisiert. Beispielsweise kann die Vorspanneinrichtung als Krafterzeugungsmittel ein Spannglied aufweisen, welches an dem Innenring angreift zur Einbringung einer die Lageröffnung zusammendrängenden Zug- oder Druckkraft, welche mittels geeigneter Stellmittel veränderbar ist.

Dank der Erfindung kann ein in einer Lenksäule vorhandenes Bauelement, nämlich das Gleitlager, mit einer zusätzlichen Funktion versehen werden, nämlich einer Dämpfungs- oder Bremswirkung, welche eine Optimierung der Haptik ermöglicht. Die zusätzliche Funktionalität kann mit geringem Aufwand realisiert werden. Ein Vorteil ist, dass die Dämpfungswirkung nicht bei der Fertigung des Innenrings festgelegt ist, sondern erst vor oder bei dem Einbau in eine Lenksäule mittels der Einstelleinrichtung individuell eingestellt und angepasst werden kann. Dadurch ist es möglich, mit einer Ausführung eines Gleitlagers ein unterschiedliches, an einen jeweiligen Fahrzeugtyp angepasstes Lenkgefühl bereitzustellen. Außerdem ist es möglich, toleranzbedingte Schwankungen der Lagerreibung und damit der Dämpfung durch Justieren der Einstellvorrichtung auszugleichen und dadurch die Reproduzierbarkeit zu verbessern.

Die Größe der Vorspannkraft kann durch die Vorspannvorrichtung unabhängig vom Innenring definiert vorgegeben werden kann. Auf diese Weise ist es möglich, beispielsweise den Innenring aus einem Material mit geeigneten Lager- und Gleiteigenschaften und guter Langzeitstabilität einzusetzen, auch wenn die Elastizität und mechanische Stabilität zu gering ist, um eine Lagerreibung vorzugeben, die zur Erzeugung der optimalen Dämpfungs- oder Bremswirkung erforderlich ist. Durch die Einstellung der Vorspannvorrichtung kann eine an den jeweiligen Einsatz angepasste Vorspannkraft vorgegeben werden, so dass mit einem Innenring unterschiedliche haptische Eigenschaften einer Lenksäule darstellbar sind.

Erfindungsgemäß weist der Innenring einen radialen Schlitz zwischen einander in Umfangsrichtung gegenüberliegenden (freien) Umfangsenden auf, an denen die Vorspannvorrichtung angreift und die Vorspannkraft in Umfangsrichtung ausübt.

Der Innenring ist geteilt, und dadurch im Wesentlichen C-förmig offen ausgebildet mit freien Umfangsenden, die den Schlitz in Umfangsrichtung begrenzen. Eine derartige Bauform ist aus dem eingangs genannten Stand der Technik im Prinzip bekannt und hat den Vorteil einer leichten Montierbarkeit auf der Lenkspindel. Allerdings kann der bekannte Innenring lediglich mit sehr geringer radialer Kraft auf der Lagerfläche der Lenkspindel anliegen, so dass die Vorgabe eines definierten, hinreichend hohen Dämpfungs- oder Bremsmoments nicht möglich ist. Erfindungsgemäß ist die Vorspannvorrichtung derart an dem offenen Innenring angebracht, dass sie an den freien Umfangsenden angreift und diese mit der Vorspannkraft in Umfangsrichtung gegeneinander zieht und folglich auf eine Verringerung der Schlitzbreite hin wirkt. Auf diese Weise wird der Innenring nach Art einer Rohrschelle zusammengezogen, die von der Vorspannvorrichtung in Umfangsrichtung in den Innenring eingeleitete Vorspannkraft wird in eine radial nach innen gerichtete Kraft umgelenkt, welche die Lageröffnung zusammenzwängt. Ein Vorteil ist die große Kraftübersetzung, so dass eine relativ kleine von der Vorspannvorrichtung in Umfangsrichtung ausgeübte Vorspannkraft in eine relativ große radiale Kraft umgesetzt wird, mit der die Lageröffnung des Innenrings auf der Lenkspindel verspannbar ist.

Durch die Einstelleinrichtung kann die zwischen den freien Umfangsenden wirkende Vorspannkraft variabel eingestellt werden. Durch die variable Vorgabe der die Umfangsenden in Richtung auf eine Verkleinerung der Schlitzbreite in Umfangsrichtung zusammenziehenden Relativkraft wird entsprechend die Lageröffnung radial zusammengezwängt, so dass im Ergebnis die Verspannung des Innenrings auf der Lenkspindel variabel einstellbar ist.

Ein weiterer Vorteil ist, dass durch die Vorspannvorrichtung der durch den Schlitz zunächst offene Innenring in Umfangsrichtung geschlossen wird, so dass eine geschlossene ringförmige Struktur gebildet wird, welche die Steifigkeit der aus der Lenkspindel zusammen mit dem Innenring gebildeten Lageranordnung gegenüber dem Stand der Technik erhöht. Die erhöhte Steifigkeit und die daraus resultierende höhere Eigenfrequenz verbessern die mechanischen Betriebseigenschaften einer mit einem derartigen Gleitlager ausgestatteten Lenksäule.

Ein C-förmiger Innenring mit einem radial durchgehenden Schlitz kann mit geringem Aufwand als Kunststoff-Spritzgussteil gefertigt werden.

Die Einstelleinrichtung kann einen Einstelltrieb aufweisen. Der Einstelltrieb kann vorzugsweise einen Schraubtrieb aufweisen. Ein Einstelltrieb weist miteinander zusammenwirkende Getriebemittel auf, welche bei einer Betätigung zur Einstellung relativ zueinander bewegbar sind, um die Vorspannkraft zu erzeugen. In der erfindungsgemäßen Vorspannvorrichtung dient der Einstelltrieb als Krafterzeugungsmittel, welches an dem Innenring angreift, derart, dass durch eine Betätigung des Einstelltriebs die Lageröffnung zusammenzwängbar ist. Ein Einstelltrieb kann beispielsweise den Schlitz überbrückend an einem C-förmigen Innenring angebracht sein und an den Umfangsenden angreifen, so dass seine Betätigung eine Veränderung der Schlitzbreite bewirkt, wodurch eine variable Vorspannkraft einstellbar ist. Mit anderen Worten ist dank des Einstelltriebs möglich, die Vorspannkraft stufenlos einzustellen.

In einer vorteilhaften Bauform kann der Einstelltrieb einen Schraubtrieb umfassen mit einer in eine Spindelmutter einschraubbaren Einstellschraube. Dadurch, dass die Spindelmutter in Umfangsrichtung fest und drehfest mit einem Umfangsende verbunden ist, und die Einstellschraube um ihre parallel zur Umfangsrichtung angeordnete Schraubenachse drehbar, dabei in Umfangsrichtung fest an dem anderen Umfangsende abgestützt ist, bewirkt eine Drehung der Einstellschraube, dass die Umfangsenden -je nach Drehrichtung der Einstellschraube -
In Umfangsrichtung aufeinander zu oder voneinander weg bewegt werden. Entsprechend erzeugt eine auf eine Verkleinerung der Schlitzbreite gerichtete Einstellung eine Erhöhung der Vorspannkraft, und umgekehrt kann die Vorspannkraft durch Drehung der Einstellschraube in entgegengesetzte Richtung reduziert werden. Die Einstellung kann durch manuelle Drehung der Einstellschraube erfolgen, indem diese eingeschraubt wird, bis die zum Erreichen der gewünschten Dämpfung erforderliche Vorspannkraft eingestellt ist. Die Einstellung kann als Vorgabe erfolgen, bevor das Lager montiert wird, oder auch in Einbaulage , so dass ein Abgleich mit dem real gemessenen Dämpfungsmoment der Lenkspindel erfolgen kann.

Alternativ oder zusätzlich kann eine anders ausgebildete Bauform eines Einstelltriebs eingesetzt werden, beispielsweise eine Exzentermechanik, ein Keilgetriebe oder dergleichen.

Bevorzugt kann die Einstelleinrichtung feststellbar ausgebildet sein. Dadurch kann eine einmal vorgegebene Einstellung der Vorspannkraft fixiert werden. Um dies zu erreichen, kann das Krafterzeugungsmittel selbsthemmend ausgebildet sein, beispielsweise bei einem als Schraubtrieb ausgebildeten Einstelltrieb. Alternativ kann eine kraft-, form- und/oder stoffschlüssige Fixierung der Einstellung erfolgen, beispielsweise indem der Einstelltrieb in der eingestellten Position verstemmt, verkeilt oder verklebt wird.

Eine vorteilhafte Ausführungsform der Erfindung sieht vor, dass die Vorspannvorrichtung ein Federelement umfasst, welches im Kraftfluss der Vorspannkraft angeordnet ist. Das Federelement kann dazu zwischen der Einstelleinrichtung und dem Innenring angeordnet sein.

Durch eine Einspannung oder Abstützung des Federelements an der Einstelleinrichtung kann die dabei als Gegenkraft auftretende elastische Federkraft als statische, elastische Vorspannkraft in den Innenring eingeleitet werden. Durch die Einstelleinrichtung kann die elastische Vorspannung des Federelements erhöht oder verringert werden, um die über das Federelement auf den Innenring übertragene Vorspannkraft einzustellen. Die dadurch erreichte elastische Ankopplung hat den Vorteil, dass der Verstellbereich der am Innenring effektiv wirksamen Vorspannkraft durch die Einspannung des Federelements vorgegeben werden kann, so dass beispielsweise bei maximal entspannter Einstelleinrichtung durch das Federelement immer noch eine Mindest-Vorspannkraft auf den Innenring ausgeübt wird. Umgekehrt kann sichergestellt werden, dass bei maximal gespannter Einstelleinrichtung durch das dann vorgespannte Federelement eine Maximal-Vorspannkraft nicht überschritten wird. Weiterhin bietet das Federelement die Möglichkeit, Schwankungen des Bremsmoments auf Grund eines vorliegenden Rundlaufabweichung der Lenkspindel im Bereich des Gleitlagers zu reduzieren.

Ein Federelement kann zwischen einem verstellbaren Einstelltrieb der Einstelleinrichtung und dem Innenring angeordnet, so dass es durch Verstellung des Einstelltriebs unterschiedlich vorspannbar ist. Es ist ebenfalls möglich, dass die Einstellung der Vorspannkraft dadurch erfolgt, dass das Federelement wahlweise an dem Innenring an unterschiedlichen Angriffsabschnitten angreifen kann, wobei das Federelement wahlweise unterschiedlich stark elastisch vorgespannt wird. Die Verstellung der Einstelleinrichtung erfolgt dann durch Einsetzen, Einspannen oder Abstützen des Federelements in unterschiedlichen Einbaupositionen am Innenring, wobei es unterschiedlich stark elastisch vorgespannt wird.

Ein Federelement kann aus Federstahl mit kleinen Abmessungen zur Verfügung gestellt werden, mit dem eine hinreichend hohe Vorspannkraft bereitgestellt werden kann. Dadurch kann eine einfache Integration in ein Gleitlager erfolgen. Ein weiterer Vorteil ist, dass Federstahl seine elastischen Eigenschaften langfristig beibehält und eine gleichbleibende Vorspannkraft und entsprechend ein gleichmäßiges Dämpfungs- und Gleitverhalten über die gesamte Lebensdauer der Lenksäule gewährleistet.

Die Vorspannvorrichtung kann zwei in Umfangsrichtung beabstandete Spannschenkel aufweist, die mit den Umfangsenden verbunden sind. Die Spannschenkel sind in Umfangsrichtung paarweise gegenüberliegend angeordnet und erstrecken sich im Bereich der Umfangsenden quer zur Umfangsrichtung, also im Wesentlichen radial oder axial. Dadurch ist die Vorspannvorrichtung klammerartig, U- oder C-förmig, bügelförmig ausgebildet. Die Spannschenkel können jeweils in axiale oder radiale Ausnehmungen formschlüssig eingreifen, die an dem Innenring im Bereich der Umfangsenden ausgebildet sind, oder axial oder radial vorstehende Vorsprünge hintergreifen oder sich daran abstützen. In die Ausnehmungen kann jeweils ein Spannschenkel eingesetzt werden, so dass die Vorspannvorrichtung den Schlitz überspannt, und ein Formschluss des Innenrings in Umfangsrichtung gebildet wird.

Zwischen den Spannschenkeln kann die Einstelleinrichtung angebracht sein. Dabei sind die Spannschenkel über die Einstelleinrichtung in Umfangsrichtung miteinander verbunden. Die von den Spannschenkeln auf den Innenring übertragene Vorspannkraft, die beispielsweise die im Spalt gegenüberliegenden freien Umfangsenden in Umfangsrichtung gegeneinander belastet, kann dadurch verändert und eingestellt werden, dass der Abstand zwischen den Schenkeln in Umfangsrichtung kleiner oder größer eingestellt wird, beispielsweise mittels eines Einstelltriebs wie vorangehend beschrieben. Dadurch können die Spannschenkel, und die mit diesen verbundenen Umfangsenden mit einer kleineren oder größeren Vorspannkraft in Umfangsrichtung gegeneinander belastet werden.

In einer vorteilhaften Weiterbildung weisen die Spannschenkel Federelemente auf, oder sind selbst als Federelemente ausgebildet. Beispielsweise können die Federelemente durch eingesetzte Blattfedern biegeelastisch ausgestaltet sein. Über die freien Enden dieser Federelemente kann eine elastische Vorspannkraft auf den Innenring ausgeübt werden, die umso größer ist, je enger der Abstand zwischen den Spannschenkel eingestellt ist. Alternativ oder zusätzlich kann ein Federelement zwischen in dem Einstelltrieb integriert sein, oder zwischen dem Einstelltrieb und einem oder beiden Spannschenkeln angeordnet sein.

Eine alternative Ausführungsform sieht vor, dass die Einstelleinrichtung an dem Innenring mindestens zwei unterschiedliche Paare von Angriffsabschnitten aufweist, zwischen denen die Vorspannvorrichtung anbringbar ist. In den Angriffsabschnitten befinden sich die Kraftangriffspunkte, über welche die Vorspannkraft in den Innenring eingeleitet wird. Beispielsweise können die oben beschriebenen Ausnehmungen, Öffnungen oder Vorsprünge die Angriffsabschnitte aufweisen, an denen sich die Spannschenkel mit ihren freien Enden in Umfangsrichtung formschlüssig abstützen, um eine relative Vorspannkraft in Umfangsrichtung auf die Umfangsenden auszuüben. Zur Realisierung einer Einstelleinrichtung kann beispielsweise ein erstes Paar von Angriffsabschnitten einen ersten, kleineren Abstand in Umfangsrichtung haben, und ein zweites Paar von Angriffsabschnitten einen zweiten, größeren Abstand in Umfangsrichtung. Wenn nun ein Paar von elastischen Spannschenkeln der Vorspannvorrichtung mit den zweiten, mit größerem Abstand auseinanderliegenden Angriffsabschnitten in Eingriff gebracht wird, werden die Spannschenkel weiter in Umfangsrichtung auseinander gebogen, als wenn sie in die ersten, näher zusammenliegenden Angriffsabschnitte eingreifen. Folglich üben die Spannschenkel bei Anbringung an den zweiten Angriffsabschnitten eine größere Vorspannkraft auf den Innenring auf, als bei Anbringung an den ersten Angriffsabschnitten. Auf diese Weise kann durch Versetzen des Federelements zwischen unterschiedlichen Angriffsabschnitten die Vorspannkraft eingestellt werden.

Durch die Versetzung des Federelements erfolgt die Einstellung der Vorspannkraft somit stufenweise bzw.in diskreten Schritten.

In der zuletzt beschriebenen Ausführung wird die erfindungsgemäße Einstelleinrichtung durch das Zusammenwirken von Federelementen mit unterschiedlichen Angriffsabschnitten an dem Innenring realisiert. Dabei kann ein Federelement U- oder C-förmig als Federklammer ausgebildet sein, welche die beiden Spannschenkel aufweist. Alternativ oder zusätzlich kann ein Einstelltrieb oder dergleichen vorgesehen sein, mit dem der Abstand der Spannschenkel verstellbar ist.

Es können anstelle der beschriebenen zwei Paare von Angriffsabschnitten auch drei oder mehr unterschiedliche Paare vorgesehen sein, um eine feiner gestufte Verstellung der Vorspannkraft zu ermöglichen. Alternativ oder zusätzlich können sich die Paare von Angriffsabschnitten auch durch ihre radiale Positionierung am Innenring unterscheiden. Bezüglich der Zwängung der Lageröffnung kann auf diese Weise eine Hebelwirkung mit unterschiedlichem Kraftübersetzungsverhältnis erzeugt werden, so dass mit demselben Federelement ebenfalls eine unterschiedliche Vorspannkraft erzeugt werden kann.

Ein Federelement kann zur Bildung eines Spannschenkels als langgestreckte Blattfeder, oder U- oder C-förmig oder bügelförmig zur Bildung einer Federklammer oder eines Federclips ausgebildet sein, welches besonders rationell und mit den geforderten elastischen Eigenschaften als Biege- oder Biege-Stanz-Teil aus Federstahldraht oder -blech hergestellt werden kann.

Die Vorspannvorrichtung kann ein bevorzugt einstückiges Blechformteil umfassen, welches eine Mehrzahl von funktionalen Elementen der Vorspannvorrichtung und der Einstelleinrichtung umfasst. Das Blechformteil kann als Press-, Stanz- und Biegeteil besonders rationell gefertigt werden, beispielsweise aus Federstahlblech. Dabei kann mit geringem Aufwand eine angepasste Formgebung realisiert werden, die beispielsweise beide Spannschenkel, Federelemente, Widerlager und Gewinde eines Schraubtriebs der Einstelleinrichtung in einem einstückigen Bauteil umfasst.

Der Innenring kann aus Kunststoff ausgebildet sein, bevorzugt als Kunststoff-Spritzgussteil. Die Verwendung von Kunststoffen für den Innenring des Gleitlagers hat den Vorteil, dass zusammen mit der üblicherweise aus Stahl oder einer Aluminiumlegierung gefertigten Lenkspindel eine langfristig verschleißarme und zuverlässige Lagerpaarung möglich ist. Durch die Wahl geeigneter Kunststoffe können die angestrebten Gleiteigenschaften in weiten Grenzen vorgegeben werden, um beispielsweise unerwünschte Haftreibungseffekte ("stick-slip") zu verringern, oder die Reibung durch Zusatz von Additiven gezielt zu erhöhen oder zu verringern. Die Fertigung als Kunststoff-Spritzgussteil aus thermoplastischem Elastomer kann in den vielfältigsten, an den jeweiligen Einsatz optimal angepassten Formgebungen rationell erfolgen. Durch das erfindungsgemäße Vorspannelement können die für die angestrebte Dämpfungs- oder Bremswirkung erforderlichen Reibungskräfte weitgehend unabhängig von den elastischen Eigenschaften des Kunststoffs eingestellt werden. Beispielsweise kann ein reibungsarm gleitender, mechanisch widerstandsfähiger, aber biegeweicher oder wenig elastischer Kunststoff durch das erfindungsgemäß zusätzliche Vorspannelement mit entsprechend hoher Vorspannkraft an die Lagerfläche der Lenkspindel radial angepresst werden, um eine definierte Lagerreibung zu erzeugen, welche dem angestrebten Brems- oder Dämpfungsmoment entspricht. Es können ebenfalls einfach unterschiedliche Paare von Angriffsabschnitten an dem Innenring ausgebildet werden.

Bezüglich der Montage ist vorteilhaft, dass der zunächst noch offene, geschlitzte Innenring unter elastischer Aufbiegung leicht in axialer Richtung auf eine Lenkspindel aufgesetzt werden kann, und die eigentliche Verspannung erst durch axiales Einsetzen der Federklammer in den Innenring erfolgt. Alternativ ist es möglich, das Vorspannelement zuerst einzusetzen, und dann den Innenring auf der Lenkspindel anzubringen.

Ein weiterer Vorteil der klammerartigen Ausbildung der Vorspannelements ist neben der kleinen Bauform und der leichten Integrierbarkeit in ein bestehendes Lagerkonzept eines Gleitlagers, dass durch die Materialstärke des Federstahldrahts oder -blechs die elastischen Eigenschaften und die Größe der Vorspannkraft mit geringem Aufwand verändert und angepasst werden können.

Alternativ ist es denkbar, andere Befestigungsmittel vorzusehen, bevorzugt durch miteinander korrespondierende Formschlusselemente an dem Innenring und dem Vorspannelement.

Es kann vorgesehen sein, dass der Innenring von einem Außenring umgeben ist. Der Innenring kann dabei im Wesentlichen koaxial in einer Aufnahmeöffnung innerhalb des Außenrings angeordnet und darin gehalten sein. Der Außenring kann in der Manteleinheit einer Lenksäule montiert sein.

Eine Weiterbildung kann dadurch erfolgen, dass zwischen dem Innenring und dem Außenring mindestens ein radiales Ausgleichselement angeordnet ist. Dadurch, dass das Ausgleichselement in radialer Richtung elastisch federnd ausgestaltet ist, kann durch ein oder mehrere Ausgleichelemente eine radial nachgiebige Halterung oder Aufhängung des Innenrings in dem Außenring realisiert werden, so dass sich der gesamte Innenring innerhalb des Außenrings radial verlagern kann, zum Ausgleich einer Deachsierung zwischen der Lenkspindelachse und der Lagerachse, die aufgrund der eingangs beschriebenen Überbestimmung bei einer Anordnung mit drei Lagern auftreten kann. Als Ausgleichselemente können beispielsweise nachgiebige Zwischenstücke aus elastischem Material radial zwischen Innen- und Außenring angeordnet sein.

Als Ausgleichselement kann ein in radialer Richtung zwischen Innen- und Außenring wirksames elastisches Element eingesetzt werden, beispielsweise eine Elastomer-Feder aus einem elastisch verformbaren Profil aus gummiartigem Material. Ein Ausgleichselement kann auch dadurch bereitgestellt werden, dass der Innenring mit einem elastischeren Material umspritzt ist. Dazu kann der Innenring im Zweikomponenten-Spritzguss auf seinem Außenumfang umlaufend oder abschnittweise mit einem nachgiebigen, weichen thermoplastischen Elastomermaterial ummantelt werden.

Die Erfindung umfasst weiter hin eine Lenksäule für ein Kraftfahrzeug, mit einer drehbar gelagerten Lenkspindel, die in zumindest einem Gleitlager drehbar gelagert ist, mit einem Innenring, der eine axial durchgehende, die Lenkspindel gleitend aufnehmende Lageröffnung aufweist, und der von einem Außenring umgeben ist, dass das Gleitlager mindestens eine Vorspannvorrichtung aufweist, die eine Vorspannkraft auf den Innenring ausübt, und den Innenring auf der Lenkspindel verspannt, wobei die Vorspannvorrichtung eine Einstelleinrichtung aufweist zur veränderbaren Vorgabe der Vorspannkraft.

Die Lenksäule kann als unverstellbare oder als verstellbare Lenksäule ausgebildet sein. Bei einer verstellbaren Lenksäule kann diese als manuell-verstellbare Lenksäule oder als motorisch-verstellbare Lenksäule ausgebildet sein. Das erfindungsgemäße Gleitlager kann somit in unterschiedlichen Typen von Lenksäulen eingesetzt werden.

Dadurch, dass das Gleitlager gemäß den vorangehend beschriebenen Ausführungsformen ausgestaltet ist, kann die Vorspannkraft und damit die Dämpfung der Lenkspindel variabel eingestellt werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine Detailansicht der Lenksäule aus Figur 1,
- Figur 3: ein erfindungsgemäßes Gleitlager einer Lenksäule gemäß Figur 1 in einer axialen Ansicht,
- Figur 4: Ansicht eines Gleitlagers zur Lagerung einer Lenkspindel,
- Figur 5: eine perspektivische Ansicht des Gleitlagers gemäß Figur 3,
- Figur 6: Gleitlager gemäß Figur 5 in einer auseinander gezogenen Darstellung,
- Figur 7: eine weitere Ausführungsform eines erfindungsgemäßen Gleitlagers in einer auseinander gezogenen Darstellung wie in Figur 6,
- Figur 8: eine zweite Ausführungsform einer erfindungsgemäßen Lenksäule in einer perspektivischen Ansicht ähnlich Figur 1,
- Figur 9: eine erfindungsgemäße Lenksäule in einer schematischen perspektivischen Ansicht;
- Figur 10: die Lenksäule gemäß Figur 9 in einer weiteren schematischen perspektivischen Ansicht;
- Figur 11: eine Detailansicht der Lenksäule gemäß Figur 9 in einer schematischen perspektivischen Ansicht;
- Figur 12: einen Querschnitt A-A durch die Lenksäule gemäß Figur 9 bis 3 im Bereich des Gleitlagers;
- Figur 13: das Gleitlager gemäß Figur 12 in einer separaten, perspektivischen Ansicht;
- Figur 14: das Gleitlager gemäß Figur 13 in einer auseinander gezogenen Darstellung;
- Figur 15: eine zweite Ausführungsform eines erfindungsgemäßen Gleitlagers in einer Querschnittsansicht wie in Figur 12 in einer ersten Einstellung;
- Figur 16: die zweite Ausführungsform gemäß Figur 15 in einer zweiten Einstellung;
- Figur 17: die Vorspannvorrichtung gemäß Figuren 11 bis 14 in einer vergrößerten Ansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

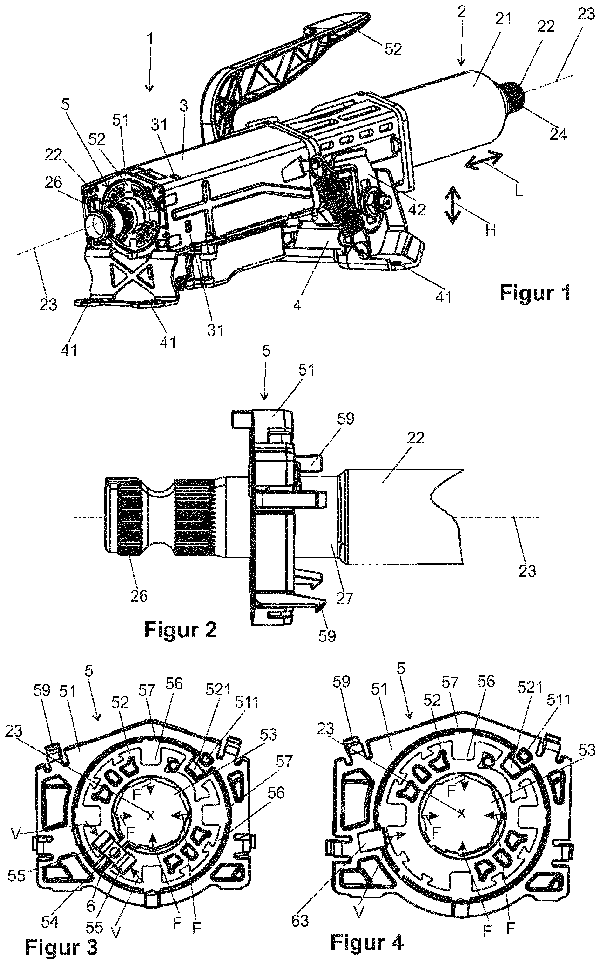

Figur 1 zeigt eine Lenksäule 1, mit einer Stelleinheit 2, die ein inneres Mantelrohr 21 aufweist, in der eine Lenkspindel 22 um eine Längsachse 23 drehbar gelagert ist. An dem bezüglich der Fahrtrichtung hinteren, dem Fahrer zugewandten Ende weist die Lenkspindel 22 einen Befestigungsabschnitt 24 zur Anbringung eines nicht dargestellten Lenkrads auf. In ihrem vorderen Bereich ist die Stelleinheit 2 mit dem Mantelrohr 21 in einer Manteleinheit 3 aufgenommen, die auch als Führungskasten bezeichnet wird. Am vorderen Ende der Lenkspindel 22, welches nach vorne aus der Manteleinheit 3 vorsteht, sind Befestigungsmittel 26 ausgebildet zur Verbindung mit einer nicht dargestellten Zwischenwelle der Lenkung.

Zur Anbringung an einer nicht dargestellten Fahrzeugkarosserie weist die Lenksäule 1 eine Trageinheit 4 mit Befestigungsmitteln 41 auf. In Einbaulage im Kraftfahrzeug befinden sich diese Befestigungsmittel 41 oben; die Darstellung von Figur 1 zeigt der besseren Übersichtlichkeit halber eine Ansicht von vorne unten.

Zwischen zwei beiderseits quer zur Längsachse 23 nach unten, also in der Darstellung von Figur 1 nach oben vorstehenden Seitenwangen 42 ist die Manteleinheit 3 gehaltert. Durch die Seitenwangen 42 geht ein Spannbolzen 51 einer Spanneinrichtung hindurch, die durch manuelle Betätigung eines mit dem Spannbolzen 51 verbundenen Spannhebels 52 wahlweise in Feststell- oder Löseposition gebracht werden kann. In Feststellposition werden die Seitenwangen 42 gegeneinander zusammengedrückt, wodurch die Manteleinheit 3 zwischen den Seitenwangen 42 reibschlüssig eingeklemmt und fixiert wird, und durch die auf die Manteleinheit 3 wirkende Klemmkraft die Stelleinheit 2 in der Manteleinheit 3 festgeklemmt und fixiert wird. In Löseposition ist die Klemmung durch Aufhebung der Klemmkraft zwischen den Seitenwangen 42 gelöst, und die Manteleinheit 3 kann zur Höhenverstellung relativ zur Trageinheit 4 zwischen den Seitenwangen 42 in Höhenrichtung H auf oder ab bewegt werden, wie mit dem Doppelpfeil angedeutet. Zur Längsverstellung kann das Mantelrohr 21 der Stelleinheit 2 in Längsrichtung L in Richtung der Längsachse 23 in der Manteleinheit 3 teleskopierend vor oder zurück bewegt werden, wie mit dem Doppelpfeil angedeutet.

Die Lenkspindel 22 ist in der Regel im Bereich des hinteren Endes des Mantelrohrs 21, und an dessen vorderem Ende, welches in der Manteleinheit 3 aufgenommen ist, mittels Wälzlagern gelagert, die hier nicht dargestellt sind. In dem vorderen Endbereich der Manteleinheit 3 ist ein erfindungsgemäß ausgestaltetes Gleitlager 5 angebracht, welches die Lenkspindel 22 in ihrem vorderen Endbereich drehbar lagert.

Das Gleitlager 5 weist einen Außenring 51 auf, in dem ein Innenring 52 bezüglich Drehung um die Längsachse 23 gesichert angeordnet ist. Figur 2 zeigt in einer vergrößerten Detaildarstellung eine Seitenansicht der in dem vorderen Endabschnitt der Lenkspindel 22 zusammen mit dem Gleitlager 5 gebildeten Lageranordnung. Daraus ist erkennbar, dass die Lenkspindel 22 einen Lagerabschnitt 27 aufweist, der mittels des Gleitlagers 5 drehbar gelagert wird.

Figur 3 zeigt eine axiale Ansicht von vorn auf das Gleitlager 5 in Richtung der Längsachse 23, entsprechend einem Blick von links in Figur 2, jedoch ohne Lenkspindel 22. Daraus geht hervor, dass der Lagerabschnitt 27 der Lenkspindel 22 in einer axial durchgehenden Lageröffnung 53 des Innenrings 52 aufgenommen ist, wodurch die Lenkspindel 22 gleitend um die Längsachse 23 drehbar gelagert ist.

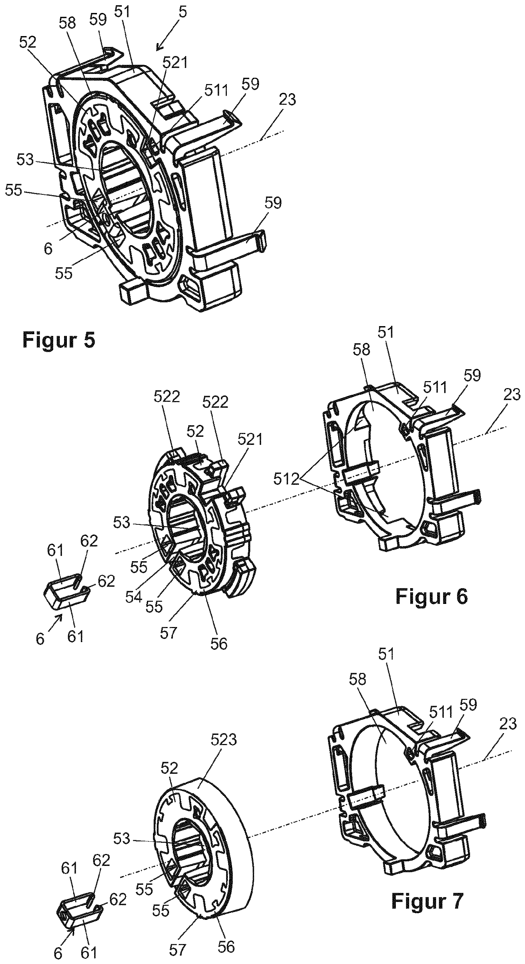

Das in Figur 3 gezeigte Gleitlager 5 ist in Figur 5 noch einmal in einer perspektivischen Darstellung, und in Figur 6 in einer in Längsrichtung auseinander gezogenen Explosionsdarstellung gezeigt.

Der Innenring 52 weist die koaxiale Lageröffnung 53 auf, und ist seinerseits koaxial in einer Aufnahmeöffnung 58 in dem Außenring 51 angebracht, wie in Figur 6 erkennbar ist. Durch einen radial durchgehenden Schlitz 54 ist der Innenring in Umfangsrichtung geteilt, so dass er einen C-förmigen Querschnitt hat. Der Schlitz 54 wird in Umfangsrichtung überspannt von einem erfindungsgemäßen Vorspannelement, welches als Federklammer 6 ausgebildet ist.

Die Federklammer 6 ist im Wesentlichen U-förmig ausgestaltet mit zwei Schenkeln 61, wie in Figur 6 erkennbar ist. Diese beiden Schenkel greifen in axialer Richtung in Ausnehmungen 55 ein oder umgreifen mit ihren Schenkeln 61 die Ausnehmungen 55, die den Innenring 52 im Bereich der am Schlitz 54 einander gegenüberliegenden Enden durchsetzen. Die Federklammer 6 ist vorzugsweise aus Federstahlblech gestanzt und gebogen, und bildet ein federelastisches Krafterzeugungselement, von dem eine Vorspannkraft V erzeugt wird, wie in Figur 3 schematisch angedeutet. Über die Ausnehmungen 55 wird diese Vorspannkraft V in Umfangsrichtung derart in den Innenring 51 eingeleitet, dass die einander im Schlitz 54 in Umfangsrichtung gegenüberliegenden, freien Enden des Innenrings 52 in Umfangsrichtung gegeneinander belastet werden, d.h. zusammengezogen werden. Anders ausgedrückt wirkt die Vorspannkraft V auf eine Verringerung der Schlitzbreite hin. Auf diese Weise wird der Innenring 52 nach Art einer Rohrschelle zusammengezogen, wobei die von der Federklammer 6 in Umfangsrichtung in den Innenring 52 eingeleitete Vorspannkraft V in eine radial nach innen gerichtete Kraft F umgelenkt wird, welche die Lageröffnung 53 radial zusammenzieht. Durch die radiale Kraft F, die in Figur 3 eingezeichnet ist, wird der Innenring 52 mit seiner Lageröffnung 53 folglich auf dem Lagerabschnitt 27 der Lenkspindel 22 verspannt.

Die durch die Federklammer 6 ausgeübte Vorspannkraft V sorgt für eine erhöhte Kraft F, welche zwischen den aufeinander gleitenden Lagerflächen der Lageröffnung 53 und des Lagerabschnitts 27 wirkt. Dadurch wird die Gleitreibung bezüglich einer Drehung der Lenkspindel 22 um die Längsachse 23 gezielt erhöht, so dass einer manuellen Lenkbewegung ein Dämpfungsmoment entgegenwirkt. Dieses Dämpfungs- oder Bremsmoment wirkt unabhängig von einer möglichen Hilfskraftunterstützung der Lenkung, bei der ein manuell eingebrachtes Lenkmoment motorisch unterstützt wird. Durch die Auslegung der Federkraft der Federklammer 6 kann die Vorspannkraft V und die daraus resultierende Kraft F, welche die Höhe der Reibung und damit der Dämpfungswirkung bestimmt, zur Erzeugung der gewünschten Haptik und des Lenkgefühls in weiten Grenzen eingestellt werden.

An den freien Enden der Schenkel 61 können widerhakenförmige Rastelemente 62 ausgebildet sein, welche sich beim Einsetzen der Federklammer 6 in die Ausnehmungen 55 auf der gegenüberliegenden Stirnseite des Innenrings 52 entgegen der axialen Einsetzrichtung festkrallen und für eine sichere, formschlüssige Befestigung der Federklammer 6 sorgen. Die einfache Montage ermöglicht es zudem, zuerst den Innenring 52 auf den Lagerabschnitt 27 der Lenkspindel 22 aufzusetzen, und dann durch axiales Einstecken und Einrasten der Federklammer 6 die Lageröffnung 53 auf der Lenkspindel 22 zu verspannen. Alternativ kann die Federklammer 6 zuerst eingesetzt werden, um anschließend den Innenring 52 in axialer Richtung auf den Lagerabschnitt 27 der Lenkspindel 22 anzubringen. In jedem Fall schließt die Federklammer 6 im monierten Zustand den Schlitz 54, so dass der Innenring 52 eine geschlossene Ringform erhält, wodurch eine höhere Stabilität der Lagerung und ein verbessertes Eigenfrequenzverhalten erreicht werden.

Der Innenring 52 ist bevorzugt als Kunststoff-Spritzgussteil aus thermoplastischem Polymer gefertigt, wobei die komplexe Form des Innenrings 52 einschließlich des Schlitzes 54 und der Ausnehmungen 55 einfach realisierbar sind.

Eine vorteilhafte Ausführung sieht vor, dass der Innenring 52 eine Umspritzung 56 aus einem gummielastischen Elastomer aufweist, die rationell im Zweikomponenten-Spritzguss aufgebracht werden kann. Aus diesem elastischen Material können radial nach außen vorstehende Ausgleichselemente 57 gebildet werden, die sich radial von innen an der Innenseite der Aufnahmeöffnung 58 abstützen, und welche eine Deachsierung der Lenkspindel 22 zusammen mit dem Innenring 52 in dem Außenring 51 zulassen und federnd aufnehmen.

Durch ein von dem Außenring radial nach innen vorstehendes Formschlusselement in Form einer Nase 511, die in eine korrespondierende Ausnehmung 521 außen in dem Innenring 52 formschlüssig eingreift, wird eine zwischen dem Innenring 52 und dem Außenring 51 bezüglich Drehung um die Längsachse 23 wirkende formschlüssige Verbindung erzeugt. Diese sorgt für eine sichere Fixierung des Innenrings 52 in dem Außenring 51.

In der in Figur 6 dargestellten Ausführung weist der Innenring 52 auf seiner äußeren Mantelfläche Formschlusselemente 522 auf, beispielsweise radial nach außen vorstehende Vorsprünge, die formschlüssig in korrespondierende Formschlusselemente 512 in der Innenwandung der Aufnahmeöffnung 58 des Außenrings 51, die entsprechend als Vertiefungen ausgebildet sein können, eingreifen.

Zur Befestigung in der Manteleinheit 3 weist der Außenring 51 Rastelemente 59 auf. Diese erstrecken sich in Längsrichtung und weisen widerhakenförmige freie Enden auf, die beim axialen Einsetzen in korrespondierende Rastöffnungen 31 in der Manteleinheit 3 einschnappen und den Außenring 51 formschlüssig in Längsrichtung fixieren.

Figur 7 zeigt eine alternative Ausführungsform, bei welcher der Innenring 52 eine glatte, zylindrische oder konische Außenmantelfläche 523 hat, welche in einer ebenfalls innen glatten, zylindrischen oder konischen Aufnahmeöffnung 58 des Außenrings 51 einsetzbar und fixierbar ist.

In Figur 4 ist eine Lageranordnung einer Lenkspindel 22 dargestellt, ist ein federelastisches Vorspannelement 63 zwischen dem Außenring 51 und dem Innenring 52 angeordnet, so dass es eine Vorspannkraft V wie eingezeichnet in radialer Richtung von außen auf den Innenring 51 ausübt. Dadurch wird dieser derart in komprimiert, dass von die Lagerfläche der Lageröffnung 53 mit einer radialen Kraft F gegen die Lagerfläche im Lagerabschnitt 27 der Lenkspindel 22 angepresst wird. Dadurch kann ebenfalls eine kontrolliert erhöhte Lagerreibung und dadurch eine Dämpfungswirkung erreichet werden.

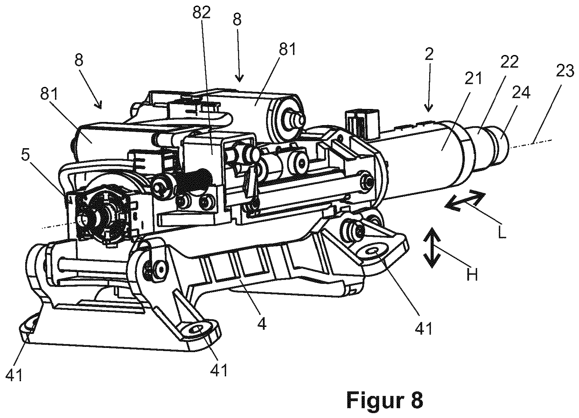

Die in Figur 8 dargestellte Ausführung einer Lenksäule 1 weist an Stelle der manuellen Spanneinrichtung der Ausführung gemäß Figur 1 elektrische Verstellantriebe 8 auf, mit jeweils einem elektrischen Stellmotor 81 und einem davon antreibbaren Spindeltrieb 82. Einer der Verstellantriebe 8 ist zwischen der Trageinheit 4 und der Manteleinheit 3 angeordnet und ermöglicht eine motorische Verstellung in Höhenrichtung H, der andere Verstellantrieb 8 wirkt in axialer Richtung zwischen der Manteleinheit 3 und der Stelleinheit 2, so dass eine motorische Längsverstellung in Längsrichtung L erfolgen kann. Dabei kann ein erfindungsgemäßes Gleitlager 5 wie für die oben beschriebene, manuell verstellbare Lenksäule 1 eingesetzt sein.

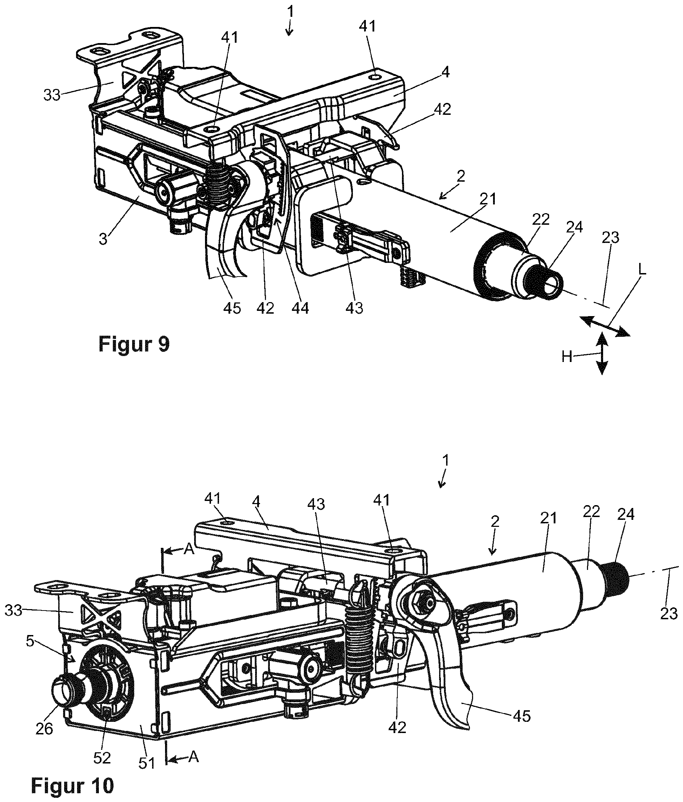

Figur 9 und 10 zeigen eine Lenksäule 1, mit einer Stelleinheit 2, die ein inneres Mantelrohr 21 aufweist, in der eine Lenkspindel 22 um eine Längsachse 23 drehbar gelagert ist. An dem bezüglich der Fahrtrichtung hinteren, dem Fahrer zugewandten Ende - in Figur 9 rechts unten auf den Betrachter zu und in Figur 10 rechts oben vom Betrachter weg gerichtet - weist die Lenkspindel 22 einen Befestigungsabschnitt 24 zur Anbringung eines nicht dargestellten Lenkrads auf. In ihrem vorderen Bereich ist die Stelleinheit 2 mit dem Mantelrohr 21 in einer Manteleinheit 3 aufgenommen, die auch als Führungskasten bezeichnet wird. Am bezüglich der Fahrtrichtung vorderen Ende der Lenkspindel 22, welches nach vorne aus der Mantel-einheit 3 vorsteht, sind Befestigungsmittel 26 ausgebildet zur Verbindung mit einer nicht dargestellten Zwischenwelle der Lenkung.

Zur Anbringung an einer nicht dargestellten Fahrzeugkarosserie weist die Lenksäule 1 eine Trageinheit 4 mit Befestigungsmitteln 41 auf. Weiterhin weist die Manteleinheit 3 einen Kopplungsabschnitt 33 auf, der mit der nicht dargestellten Fahrzeugkarosserie verbindbar ist. Der Kopplungsabschnitt 33 ist als biegeweicher Abschnitt ausgebildet, der sich zur Bereitstellung einer Höhenverstellung elastisch verformt, wenn die Manteleinheit 3 gegenüber der Trageinheit 4 verschwenkt wird.

Zwischen zwei beiderseits quer zur Längsachse 23 nach unten vorstehenden Seitenwangen 42 ist die Manteleinheit 3 in der Trageinheit 4 gehaltert. Durch die Seitenwangen 42 geht quer zur Längsachse 23 ein Spannbolzen 43 einer Spanneinrichtung hindurch, die ein Spanngetriebe 44 aufweist, das durch manuelle Betätigung eines mit dem Spannbolzen 43 verbundenen Spannhebels 45 wahlweise in Feststell- oder Löseposition gebracht werden kann. In Feststellposition werden die Seitenwangen 42 von dem Spanngetriebe 44 gegeneinander zusammengedrückt, wodurch die Manteleinheit 3 zwischen den Seitenwangen 42 reibschlüssig eingeklemmt und fixiert wird, und durch die auf die Manteleinheit 3 wirkende Klemmkraft die Stelleinheit 2 in der Manteleinheit 3 festgeklemmt und fixiert wird. In Löseposition ist die Klemmung durch Aufhebung der Klemmkraft zwischen den Seitenwangen 42 gelöst, und die Manteleinheit 3 kann zur Höhenverstellung relativ zur Trageinheit 4 zwischen den Seitenwangen 42 in Höhenrichtung H auf oder ab bewegt werden, wie mit dem Doppelpfeil angedeutet. Zur Längsverstellung kann das Mantelrohr 21 der Stelleinheit 2 in Längsrichtung L in Richtung der Längsachse 23 in der Manteleinheit 3 teleskopierend vor oder zurück bewegt werden, wie mit dem Doppelpfeil angedeutet.

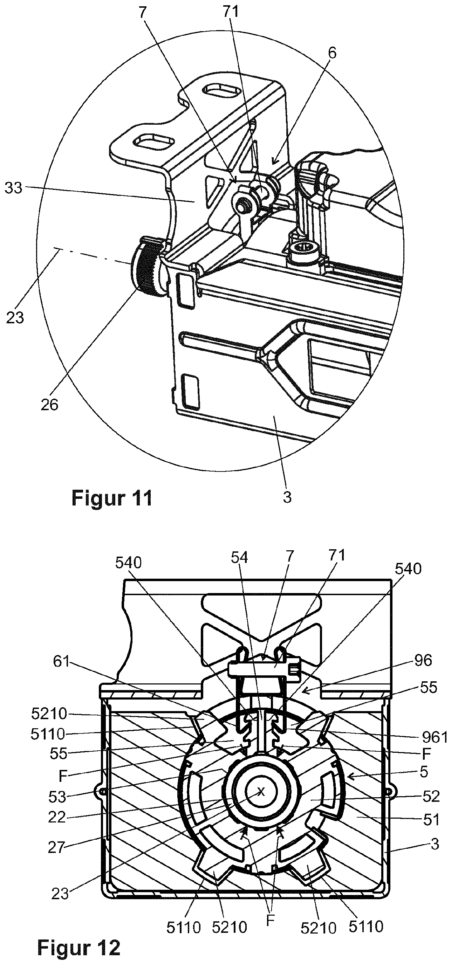

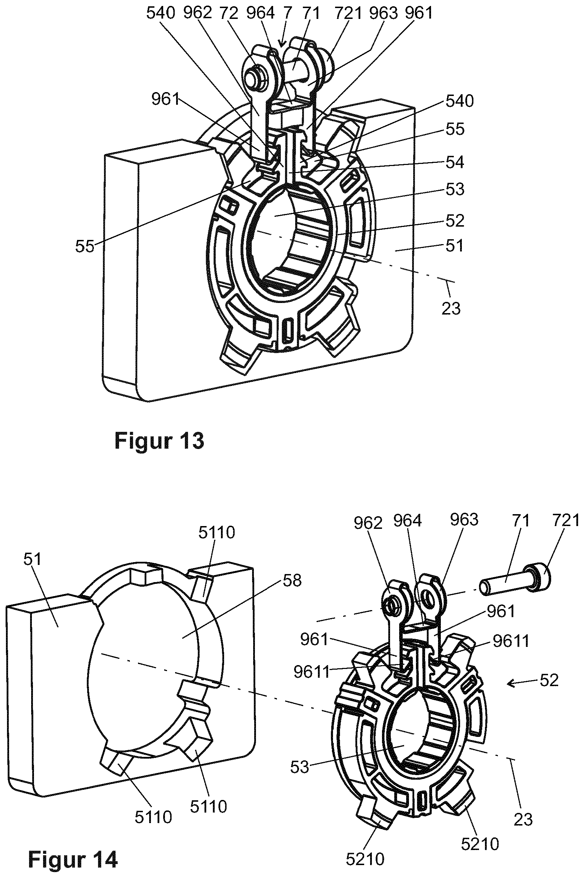

Die Lenkspindel 22 ist in der Regel im Bereich des hinteren Endes des Mantelrohrs 21, und an dessen vorderem Ende, welches in der Manteleinheit 3 aufgenommen ist, mittels Wälzlagern gelagert, die hier nicht dargestellt sind. In dem vorderen Endbereich der Manteleinheit 3 ist ein erfindungsgemäß ausgestaltetes Gleitlager 5 angebracht, welches die Lenkspindel 22 in ihrem vorderen Endbereich in der Manteleinheit 3 drehbar lagert. Das Gleitlager 5 ist in einer axialen Querschnittsansicht in Figur 12, sowie einzeln in einer perspektivischen Ansicht im montierten Zustand in Figur 13 sowie in einer auseinander gezogenen Explosionsdarstellung in Figur 14 gezeigt.

Das Gleitlager 5 weist einen Außenring 51 auf, der im gezeigten Beispiel einen rechteckigen Außenquerschnitt hat, mit dem er formschlüssig im hinteren Endbereich der Manteleinheit 3 fixiert ist. In dem Außenring 51 ist ein Innenring 52 bezüglich Drehung um die Längsachse 23 gesichert angeordnet. Als Verdrehsicherung weist der Innenring 52 bezüglich der Längsachse 23 radial nach außen vorstehende Formschlusselemente 5210 auf, die formschlüssig in korrespondierende Ausnehmungen 5110 des Außenrings 51 eingreifen.

Der Innenring 52 weist eine axial durchgehende Lageröffnung 53 auf, in der die Lenkspindel 22 (in einem Lagerabschnitt 27) um die Längsachse 23 gleitend drehbar gelagert ist.

Der Innenring 52, der die koaxiale Lageröffnung 53 aufweist, ist seinerseits koaxial in einer Aufnahmeöffnung 58 in dem Außenring 51 angebracht, wie in Figuren 12, 13 und 14 erkennbar ist.

Der Innenring 52 ist durch einen radialen Schlitz 54 geteilt, so dass er einen C-förmigen Querschnitt hat. In dem Schlitz 54 liegen sich die freien Umfangsenden 540 des Innenrings 52 in Umfangsrichtung einander gegenüber. In Umfangsrichtung wird der Schlitz 54 von einer erfindungsgemäßen Vorspannvorrichtung 96 überspannt.

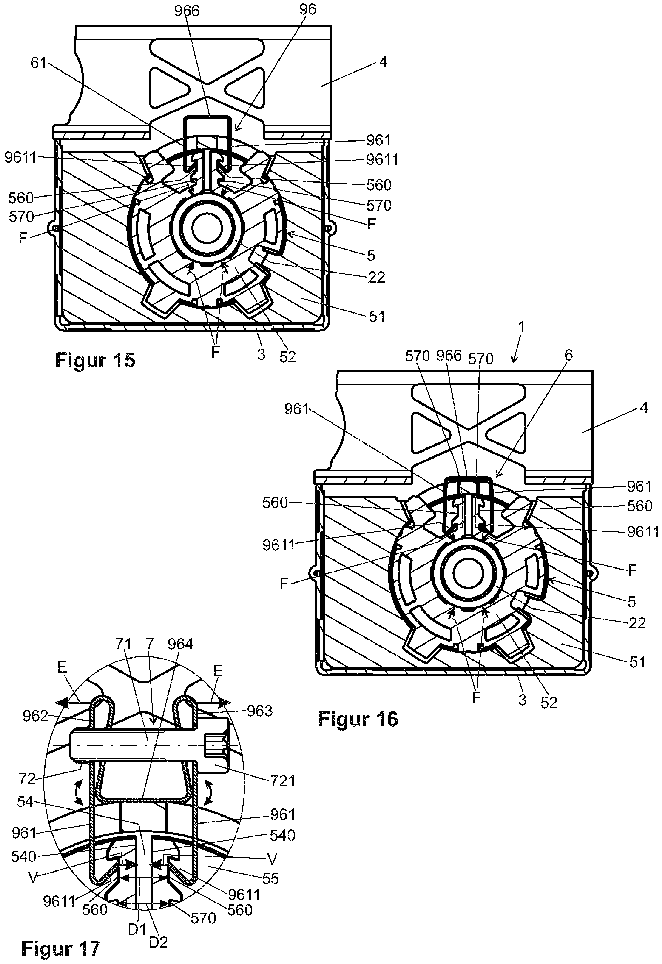

Figur 17 zeigt die Vorspannvorrichtung 96 aus Figur 14 in vergrößerter Darstellung. Die Vorspannvorrichtung 96 umfasst zwei Spannschenkel 961, die sich einander in Umfangsrichtung gegenüberliegen und mit ihren freien Enden 9611 im Wesentlichen radial nach innen zur Längsachse 23 gerichtet sind. Die freien Enden 9611 sind zu ihren einander in Umfangsrichtung gegenüberliegenden Seite widerhakenförmig umgebogen.

Über eine erfindungsgemäße Einstelleinrichtung 7 sind die Spannschenkel 961 miteinander verbunden. Die Einstelleinrichtung 7 weist einen ersten Spannhebel 962 und einen zweiten Spannhebel 963 auf, welche radiale Verlängerungen der beiden Spannschenkel 961 bilden. Durch eine Öffnung in dem zweiten Spannhebel 963 ist eine Einstellschraube 71 drehbar hindurchgeführt, die sich mit ihrem Kopf 721 an dem Spannhebel 963 abstützt und in das Innengewinde einer an dem ersten Spannhebel 962 ausgebildeten Spindelmutter 72 eingeschraubt ist. Das Gewinde der Einstellschraube 71 und der Spindelmutter 72 ist bevorzugt als metrisches Regelgewinde oder als metrisches Feingewinde ausgebildet. In dem Bereich, in dem die Spannhebel 962 und 963 in die Spannschenkel 961 übergehen, ist ein Stützelement 964 zwischen den Spannhebeln 962 und 963 angeordnet, so dass der erste Spannhebel 962 zusammen mit dem einen Spannschenkel 961, und der zweite Spannhebel 962 zusammen mit dem anderen Spannschenkel 961 jeweils einen zweiarmigen Hebel bildet, der um das Stützelement 964 wippend gelagert ist, wie mit den gebogenen Pfeilen angedeutet.

Die Einstellschraube 71 bildet zusammen mit der Spindelmutter 72 einen auf die Spannhebel 962 und 963 wirkenden Einstelltrieb, nämlich einen Spindeltrieb. Zum Einstellen durch Herausschrauben der Einstellschraube 71 aus der Spindelmutter 72 werden die Spannhebel 962 und 963 in Umfangsrichtung auseinander gespreizt, also in Umfangsrichtung voneinander weg bewegt, wie mit den Pfeilen E angedeutet. Dadurch werden die freien Enden 9611 der Spannschenkel 961 über die Hebelkopplung gegeneinander bewegt, wie dies mit den Pfeilen V angedeutet ist. Wird die Einstellschraube 71 in umgekehrter Richtung gedreht, wird sie aus der Spindelmutter 72 herausgeschraubt, die Spannhebel 962 und 963 in Umfangsrichtung gegeneinander entgegen der Pfeilrichtung E zusammengezogen, und entsprechend die Spannschenkel 961 entgegen der Pfeilrichtung V auseinander bewegt.

Die beiden Spannschenkel 961 und die Spannhebel 962 und 963 sind zusammen mit dem Stützelement 964 in der dargestellten Ausführung als einstückiges Stanz-Biegeteil aus einem Federstahlabschnitt ausgebildet, wobei die Spindelmutter 72 ebenfalls einstückig eingeformt ist. Lediglich die Einstellschraube 71 ist als einziges separates Zusatzteil an der Vorspannvorrichtung 96 montiert. Dadurch kann eine rationelle Fertigung erfolgen und es wird eine hohe Funktionssicherheit erreicht. Ein weiterer Vorteil ist, dass die Spannschenkel 961 in Form von Blattfedern als Federelemente ausgebildet sein können, so dass die freien Enden 9611 in Umfangsrichtung gegeneinander elastisch verfombar sind, in und entgegen der Pfeilrichtung V. Dadurch, dass diese Federelemente zwischen der Einstelleinrichtung 7 und den freien Enden 9611 angeordnet sind, befinden sie sich im Kraftfluss zwischen der Einstelleinrichtung 7 und dem Innenring 52.

Der Innenring 52 weist radiale Ausnehmungen 55 auf, die im Bereich der Umfangsenden 540 von außen eingeformt sind. Die Spannschenkel 961 greifen radial von außen in diese Ausnehmungen 55 ein, wobei die freien Enden 9611 in Umfangsrichtung paarweise angeordnete Angriffsabschnitte 560 kontaktieren. Die beiden Angriffsabschnitte 560 bilden dem Schlitz 54 in Umfangsrichtung abgewandte Flächenabschnitte, die einen Abstand D1 voneinander haben, wenn die Lenkspindel 22 in der Lageröffnung 53 aufgenommen ist.

Dadurch, dass die Einstellschraube 71 so weit aus der Spindelmutter 72 herausgeschraubt wird, dass die Enden 9611 einen Abstand voneinander haben, der kleiner ist als der Abstand D1 der Angriffsabschnitte 560, üben die Spannschenkel 961 über die Enden 9611 eine Vorspannkraft V auf die Angriffsabschnitte 560 aus, welche mit der oben beschriebenen Pfeilrichtung V beim Vorspannen korreliert ist. Indem die Spannhebel 962 und 963 durch Verdrehen der Einstellschraube 71 weiter auseinandergespreizt werden, kann der Betrag der Vorspannkraft V größer eingestellt werden. Umgekehrt kann die Vorspannung durch Zusammenziehen der Spannhebel 962, 963 kleiner eingestellt werden.

Über die Angriffsabschnitte 560 wird die Vorspannkraft V in Umfangsrichtung derart in den Innenring 51 eingeleitet, dass die einander im Schlitz 54 gegenüberliegenden, freien Umfangsenden 540 des Innenrings 52 in Umfangsrichtung gegeneinander belastet werden, d.h. zusammengezogen werden. Anders ausgedrückt wirkt die Vorspannkraft V auf eine Verringerung der Schlitzbreite hin. Auf diese Weise wird der Innenring 52 nach Art einer Rohrschelle zusammengezogen, wobei die über die Spannschenkel 961 in Umfangsrichtung in den Innenring 52 eingeleitete Vorspannkraft V in eine radial nach innen gerichtete Kraft F umgelenkt wird, welche die Lageröffnung 53 radial zusammenzieht. Durch die radiale Kraft F, die in Figur 12 schematisch eingezeichnet ist, wird der Innenring 52 mit seiner Lageröffnung 53 auf der Lenkspindel 22 verspannt, so dass ein Presssitz zwischen Innenring 52 und Lenkspindel 22 gebildet ist.

Die durch die Vorspannvorrichtung 96 ausgeübte Vorspannkraft V sorgt für eine erhöhte Kraft F, welche zwischen den aufeinander gleitenden Lagerflächen der Lageröffnung 53 und des Lagerabschnitts 27 wirkt. Dadurch wird die Gleitreibung bezüglich einer Drehung der Lenkspindel 22 um die Längsachse 23 gezielt erhöht, so dass einer manuellen Lenkbewegung ein Dämpfungsmoment entgegenwirkt. Dieses Dämpfungs- oder Bremsmoment wirkt unabhängig von einer möglichen Hilfskraftunterstützung der Lenkung, bei der ein manuell eingebrachtes Lenkmoment motorisch unterstützt wird. Durch die Einstellung der Einstelleinrichtung 7 der Vorspannvorrichtung 96 kann die Vorspannkraft V und die daraus resultierende Kraft F, welche die Höhe der Reibung und damit der Dämpfungswirkung bestimmt, zur Erzeugung der gewünschten Haptik und des Lenkgefühls stufenlos eingestellt werden.

Eine veränderte Vorgabe der Vorspannkraft kann auch dadurch erfolgen, dass die Krafteinleitung der Enden 9611 in den Innenring 52 verändert wird. Wie in Figur 17 gezeigt, kann ein weiteres Paar von Angriffsabschnitten 570 vorgesehen sein, die einen vom Abstand D1 verschiedenen Abstand D2 voneinander haben können, und die eine unterschiedliche radiale Position haben können, etwa weiter innenliegend, wie in Figur 17. Dadurch, dass die Enden 9611 an diese Angriffsabschnitten 570 angesetzt werden, kann bei ansonsten identischer Einstellung der Vorspanneinrichtung 96, dies entspricht derselben Einstellung der Einstelleinrichtung 7, eine unterschiedliche Vorspannkraft erzeugt bzw. ausgeübt werden. Um dies zu realisieren, ist eine nicht gezeigt Vorspannvorrichtung vorzusehen, bei der der Stützabschnitt 964 näher an der Einstellschraube 71 angeordnet ist. Die restliche Ausgestaltung der Vorspannvorrichtung ist ident mit der Vorspannvorrichtung 96, die mit den ersten Angriffsabschnitten 560 zusammenwirkt, wie dies in den Figuren 12 bis 14 und Figur 17 dargestellt ist.

Der zuletzt beschriebene Wirkzusammenhang zur Einstellung der Vorspannkraft wird in einer zweiten Ausführungsform genutzt, die in Figuren 15 und 16 in einer Ansicht analog zu Figuren 12 und 17 in zwei unterschiedlichen Einstellungen dargestellt ist.

Die Einstelleinrichtung wird durch das Zusammenwirken eines bügelförmigen, bevorzugt einstückigen Federelements 966 mit unterschiedlichen Angriffsabschnitten 560, 570, wie vorangehend beschrieben, realisiert. Das Federelement 966 hat Spannschenkel 961, wie die oben beschriebene erste Ausführung, jedoch im Unterschied dazu keinen Einstelltrieb 7. Die Einstellung der Vorspannkraft kann einfach dadurch erfolgen, dass die Enden 9611 der Spannschenkel 961 entweder an das Paar der ersten Angriffsabschnitte 560 angesetzt werden, wie in Figur 15, oder radial an das Paar der zweiten Angriffsabschnitte 570 versetzt werden, wie in Figur 16.

Durch die widerhakenförmige Ausbildung können sich die freien Enden 9611 der Spannschenkel 961 beim Einsetzen der Federklammer 96 in die Ausnehmungen 55 festkrallen und für eine sichere, formschlüssige Befestigung der Vorspannvorrichtung 96 oder des Federelements 966 sorgen. Im montierten Zustand wir der Schlitz 54 durch die Vorspannvorrichtung 96 oder das Federelement 966 überbrückt, so dass der Innenring 52 eine geschlossene Ringform erhält, wodurch eine höhere Stabilität der Lagerung und ein verbessertes Eigenfrequenzverhalten erreicht werden.

Der Innenring 52 ist bevorzugt als Kunststoff-Spritzgussteil aus thermoplastischem Polymer gefertigt, wobei die komplexe Form des Innenrings 52 einschließlich des Schlitzes 54 und der Ausnehmungen 55, gegebenenfalls mit den unterschiedlichen Angriffsabschnitten 560 und 570, einfach realisierbar sind. Ganz besonders bevorzugt ist der Innenring 52 aus einem Polyoxymethylen mit Kohlenstofffasern gebildet. Die Kohlenstofffasern bieten den Vorteil der Schmierung und der Geräuschreduktion.

Eine vorteilhafte Ausführung sieht vor, dass der Innenring 52 eine Umspritzung aus einem gummielastischen Elastomer aufweist, die rationell im Zweikomponenten-Spritzguss aufgebracht werden kann. Aus diesem elastischen Material können radial nach außen vorstehende Ausgleichselemente gebildet werden, die sich radial von innen an der Innenseite der Aufnahmeöffnung 58 abstützen, und welche eine Deachsierung der Lenkspindel 22 zusammen mit dem Innenring 52 in dem Außenring 51 zulassen und federnd aufnehmen.

Eine hier nicht dargestellte Ausführung einer Lenksäule 1 weist an Stelle der manuellen Spanneinrichtung mit dem manuellen Spannhebel 45 der Ausführung gemäß Figur 9 elektrische Verstellantriebe auf, mit jeweils einem elektrischen Stellmotor und einem davon antreibbaren Spindeltrieb. Einer der Verstellantriebe kann zwischen der Trageinheit 4 und der Manteleinheit 3 angeordnet sein und eine motorische Verstellung in Höhenrichtung H ermöglichen, der andere Verstellantrieb 8 kann in axialer Richtung zwischen der Manteleinheit 3 und der Stelleinheit 2 angeordnet sein, so dass eine motorische Längsverstellung in Längsrichtung L erfolgen kann. Dabei kann ein erfindungsgemäßes Gleitlager 5 wie für die oben beschriebene, manuell verstellbare Lenksäule 1 eingesetzt sein.

### Bezugszeichenliste

- 1: Lenksäule
- 2: Stelleinheit
- 21: Mantelrohr
- 22: Lenkspindel
- 23: Längsachse
- 24: Befestigungsabschnitt
- 26: Befestigungsmittel
- 27: Lagerabschnitt
- 3: Manteleinheit
- 31: Rastöffnungen
- 4: Trageinheit
- 41: Befestigungsmittel
- 42: Seitenwange
- 5: Gleitlager
- 51: Außenring
- 511: Nase
- 5110: Ausnehmung
- 512: Formschlusselement
- 52: Innenring
- 521: Ausnehmung
- 5210: Formschlusselement
- 522: Formschlusselement
- 523: Außenmantelfläche
- 53: Lageröffnung
- 54: Schlitz
- 55: Ausnehmungen
- 56: Umspritzung
- 560, 570: Angriffsabschnitte
- 57: Ausgleichselement
- 58: Aufnahmeöffnung
- 59: Rastelement
- 6: Federklammer (Vorspannelement)
- 61: Schenkel
- 62: Rastelemente
- 63: Vorspannelement
- 7: Einstelleinrichtung
- 71: Einstellschraube
- 72: Spindelmutter
- 721: Kopf
- 8: Verstellantrieb
- 81: Stellmotor
- 82: Spindeltrieb
- 560, 570: Angriffsabschnitte
- 96: Vorspannvorrichtung
- 961: Spannschenkel
- 9611: Enden
- 962, 963: Spannhebel
- 964: Stützelement
- 966: Federelement

- V: Vorspannkraft
- F: Kraft
- D1, D2: Abstand

## Patentansprüche

1. Gleitlager (5) für eine Lenkspindel (22) einer Lenksäule (1) für ein Kraftfahrzeug, mit einem Innenring (52), der zur gleitenden Aufnahme der Lenkspindel (22) eine axial durchgehende Lageröffnung (53) aufweist,
wobei mindestens ein Vorspannelement (6) derart angeordnet ist, dass es auf den Innenring (52) eine Vorspannkraft ausübt, zur Verspannung des Innenrings (52) auf der Lenkspindel (22) **dadurch gekennzeichnet,**
**dass** der Innenring (52) einen radialen Schlitz (54) zwischen einander in Umfangsrichtung gegenüberliegenden Umfangsenden (540) aufweist, an denen das Vorspannelement (6) angreift und die Vorspannkraft in Umfangsrichtung ausübt.

2. Gleitlager (5) nach Anspruch 1, **dadurch gekennzeichnet, dass** das Vorspannelement als Federelement (6) ausgebildet ist.

3. Gleitlager (5) nach einem der vorangehenden Ansprüche, **dadurch gekennzeichnet, dass** der Innenring (52) aus Kunststoff ausgebildet ist, bevorzugt als Kunststoff-Spritzgussteil.

4. Gleitlager (5) nach einem der vorangehenden Ansprüche, **dadurch gekennzeichnet, dass** der Innenring (52) einen radialen Schlitz (54) aufweist, wobei das Vorspannelement (6) den Schlitz (54) überbrückt und in Umfangsrichtung zusammenzieht.

5. Gleitlager (5) nach Anspruch 4, **dadurch gekennzeichnet, dass** das Vorspannelement (6) klammerartig ausgebildet ist und in axialer Richtung mit dem Innenring (52) verbunden ist.

6. Gleitlager (5) nach einem der vorangehenden Ansprüche, **dadurch gekennzeichnet, dass** der Innenring (52) von einem Außenring (51) umgeben ist.

7. Gleitlager (5) nach Anspruch 6, **dadurch gekennzeichnet, dass** zwischen dem Innenring (51) und dem Außenring (52) mindestens ein radiales Ausgleichselement (57) angeordnet ist.

8. Gleitlager (5) nach Anspruch 7, **dadurch gekennzeichnet, dass** der Innenring (52) mit einem elastischen Material umspritzt ist.

9. Lenksäule (1) für ein Kraftfahrzeug, mit einer drehbar gelagerten Lenkspindel (22), die in zumindest einem Gleitlager (5) drehbar gelagert ist, mit einem Innenring (52), der eine axial durchgehende, die Lenkspindel (22) gleitend aufnehmende Lageröffnung (53) aufweist, und der von einem Außenring (51) umgeben ist,
wobei das Gleitlager (5) ein Vorspannelement (6) aufweist, welches eine Vorspannkraft auf den Innenring (52) ausübt, und den Innenring (52) auf der Lenkspindel (22) verspannt, **dadurch gekennzeichnet,**
**dass** der Innenring (52) einen radialen Schlitz (54) zwischen einander in Umfangsrichtung gegenüberliegenden Umfangsenden (540) aufweist, an denen das Vorspannelement (6) angreift und die Vorspannkraft in Umfangsrichtung ausübt.

10. Lenksäule (1) nach Anspruch 9, **dadurch gekennzeichnet, dass** das Gleitlager (5) nach einem der Ansprüche 2 bis 8 ausgebildet ist.

11. Gleitlager (5) für eine Lenkspindel (22) einer Lenksäule (1) für ein Kraftfahrzeug, mit einem Innenring (52), der zur gleitenden Aufnahme der Lenkspindel (22) eine axial durchgehende Lageröffnung (53) aufweist,
wobei mit dem Innenring (52) eine Vorspannvorrichtung (6) wirkverbunden ist, die auf den Innenring (52) eine die Lageröffnung (53) zusammenzwängende Vorspannkraft ausübt, zur Verspannung des Innenrings (52) auf der Lenkspindel (22), **dadurch gekennzeichnet,**
**dass** die Vorspannvorrichtung (6) eine Einstelleinrichtung (7) aufweist zur veränderbaren Vorgabe der Vorspannkraft, wobei der Innenring (52) einen radialen Schlitz (54) zwischen einander in Umfangsrichtung gegenüberliegenden Umfangsenden (540) aufweist, an denen die Vorspannvorrichtung (6) angreift.

12. Gleitlager (5) nach einem der vorangehenden Ansprüche, **dadurch gekennzeichnet, dass** die Einstelleinrichtung einen Einstelltrieb aufweist.

13. Gleitlager (5) nach einem der vorangehenden Ansprüche, **dadurch gekennzeichnet, dass** die Vorspannvorrichtung (6) ein Federelement (961) umfasst.

14. Gleitlager (5) nach einem der vorangehenden Ansprüche, **dadurch gekennzeichnet, dass** die Vorspannvorrichtung (6) zwei in Umfangsrichtung beabstandete Spannschenkel (961) aufweist, die mit den Umfangsenden (540) verbunden sind.

15. Gleitlager (5) nach Anspruch 14, **dadurch gekennzeichnet, dass** zwischen den Spannschenkeln (961) die Einstelleinrichtung (7) angebracht ist.

16. Gleitlager (5) nach einem der vorangehenden Ansprüche, **dadurch gekennzeichnet, dass** die Einstelleinrichtung (7) an dem Innenring (52) mindestens zwei unterschiedliche Paare von Angriffsabschnitten (560, 570) aufweist, zwischen denen die Vorspannvorrichtung (6, 966) anbringbar ist.

17. Gleitlager (5) nach einem der vorangehenden Ansprüche, **dadurch gekennzeichnet, dass** die Vorspannvorrichtung (6) ein bevorzugt einstückiges Blechformteil umfasst, welches eine Mehrzahl von funktionalen Elementen (961, 962, 963, 964, 72) umfasst.

18. Gleitlager (5) nach einem der vorangehenden Ansprüche, **dadurch gekennzeichnet, dass** der Innenring (52) aus Kunststoff ausgebildet ist.

19. Gleitlager (5) nach einem der vorangehenden Ansprüche, **dadurch gekennzeichnet, dass** der Innenring (52) von einem Außenring (51) umgeben ist.

20. Lenksäule (1) für ein Kraftfahrzeug, mit einer drehbar gelagerten Lenkspindel (22), die in zumindest einem Gleitlager (5) drehbar gelagert ist, mit einem Innenring (52), der eine axial durchgehende, die Lenkspindel (22) gleitend aufnehmende Lageröffnung (53) aufweist, und der von einem Außenring (51) umgeben ist,
wobei das Gleitlager (5) mindestens eine Vorspannvorrichtung (6) aufweist, die eine Vorspannkraft auf den Innenring (52) ausübt, und den Innenring (52) auf der Lenkspindel (22) verspannt, **dadurch gekennzeichnet,**
**dass** die Vorspannvorrichtung (6) eine Einstelleinrichtung (7) aufweist zur veränderbaren Vorgabe der Vorspannkraft, wobei der Innenring (52) einen radialen Schlitz (54) zwischen einander in Umfangsrichtung gegenüberliegenden Umfangsenden (540) aufweist, an denen das Vorspannelement (6) angreift und die Vorspannkraft in Umfangsrichtung ausübt.

21. Lenksäule (1) nach Anspruch 20, **dadurch gekennzeichnet, dass** das Gleitlager (5) nach einem der Ansprüche 2 bis 8 ausgebildet ist.

## Claims

1. Plain bearing (5) for a steering spindle (22) of a steering column (1) for a motor vehicle, having an inner ring (52) with an axially continuous bearing opening (53) for slidably receiving the steering spindle (22), wherein at least one prestressing element (6) is arranged in such a way that it exerts a prestressing force on the inner ring (52), for the clamping of the inner ring (52) on the steering spindle (22),
**characterized in that**
the inner ring (52) has a radial slot (54) between oppositely facing circumferential ends (540) in the circumferential direction, with which the prestressing element (6) engages and exerts the prestressing force in the circumferential direction.

2. Plain bearing (5) according to Claim 1,
**characterized in that** the prestressing element is designed as a spring element (6).

3. Plain bearing (5) according to one of the preceding claims, **characterized in that** the inner ring (52) is formed from plastic, preferably as an injection-moulded plastic part.

4. Plain bearing (5) according to one of the preceding claims, **characterized in that** the inner ring (52) has a radial slot (54), wherein the prestressing element (6) bridges over the slot (54) and contracts the latter in the circumferential direction.

5. Plain bearing (5) according to Claim 4,
**characterized in that** the prestressing element (6) is configured as a clamp and is connected in the axial direction to the inner ring (52).

6. Plain bearing (5) according to one of the preceding claims, **characterized in that** the inner ring (52) is surrounded by an outer ring (51).

7. Plain bearing (5) according to Claim 6,
**characterized in that** at least one radial compensation element (57) is arranged between the inner ring (51) and the outer ring (52).

8. Plain bearing (5) according to claim 7,
**characterized in that** the inner ring (52) is overmoulded with an elastic material.

9. Steering column (1) for a motor vehicle, having a rotatably mounted steering spindle (22), which is rotatably mounted in at least one plain bearing (5), having an inner ring (52) with an axially continuous bearing opening (53) slidably receiving the steering spindle (22), and surrounded by an outer ring (51), wherein the plain bearing (5) comprises a prestressing element (6), which exerts a prestressing force on the inner ring (52) and clamps the inner ring (52) on the steering spindle (22),
**characterized in that**
the inner ring (52) has a radial slot (54) between oppositely facing circumferential ends (540) in the circumferential direction, with which the prestressing element (6) engages and exerts the prestressing force in the circumferential direction.

10. Steering column (1) according to Claim 9, **characterized in that** the plain bearing (5) is designed according to one of Claims 2 to 8.

11. Plain bearing (5) for a steering spindle (22) of a steering column (1) for a motor vehicle, having an inner ring (52) with an axially continuous bearing opening (53) for slidably receiving the steering spindle (22), wherein a prestressing device (6) is in operative connection with the inner ring (52), exerting on the inner ring (52) a prestressing force that squeezes together the bearing opening (53), for the clamping of the inner ring (52) on the steering spindle (22),
**characterized in that**
the prestressing device (6) comprises an adjusting device (7) for the variable setting of the prestressing force, wherein the inner ring (52) has a radial slot (54) between oppositely facing circumferential ends (540) in the circumferential direction, with which the prestressing device (6) engages.

12. Plain bearing (5) according to one of the preceding claims, **characterized in that** the adjusting device comprises an adjusting drive.

13. Plain bearing (5) according to one of the preceding claims, **characterized in that** the prestressing device (6) comprises a spring element (961).

14. Plain bearing (5) according to one of the preceding claims, **characterized in that** the prestressing device (6) comprises two clamping legs (961) spaced apart in the circumferential direction, which are connected to the circumferential ends (540).

15. Plain bearing (5) according to Claim 14,
**characterized in that** the adjusting device (7) is arranged between the clamping legs (961).

16. Plain bearing (5) according to one of the preceding claims, **characterized in that** the adjusting device (7) comprises at least two different pairs of engaging portions (560, 570) on the inner ring (52), between which the prestressing device (6, 966) can be mounted.

17. Plain bearing (5) according to one of the preceding claims, **characterized in that** the prestressing device (6) comprises a preferably single piece of formed sheet metal, having a plurality of functional elements (961, 962, 963, 964, 72).

18. Plain bearing (5) according to one of the preceding claims, **characterized in that** the inner ring (52) is formed of plastic.

19. Plain bearing (5) according to one of the preceding claims, **characterized in that** the inner ring (52) is surrounded by an outer ring (51).

20. Steering column (1) for a motor vehicle, having a rotatably mounted steering spindle (22), which is rotatably mounted in at least one plain bearing (5), having an inner ring (52) with an axially continuous bearing opening (53) slidably receiving the steering spindle (22), and surrounded by an outer ring (51), wherein the plain bearing (5) comprises at least one prestressing device (6), which exerts a prestressing force on the inner ring (52) and clamps the inner ring (52) on the steering spindle (22),
**characterized in that**
the prestressing device (6) comprises an adjusting device (7) for the variable setting of the prestressing force, wherein the inner ring (52) has a radial slot (54) between oppositely facing circumferential ends (540) in the circumferential direction, with which the prestressing element (6) engages and exerts the prestressing force in the circumferential direction.

21. Steering column (1) according to Claim 20,
**characterized in that** the plain bearing (5) is designed according to one of claims 2 to 8.

## Revendications

1. Palier lisse (5) pour un arbre de direction (22) d'une colonne de direction (1) pour un véhicule automobile, comprenant une bague intérieure (52) qui présente une ouverture de palier (53) s'étendant axialement pour recevoir de manière glissante l'arbre de direction (22),
dans lequel au moins un élément de précontrainte (6) est disposé de telle sorte qu'il exerce une force de précontrainte sur la bague intérieure (52) pour précontraindre la bague intérieure (52) sur l'arbre de direction (22),
**caractérisé en ce que**
la bague intérieure (52) présente une fente radiale (54) entre des extrémités périphériques (540) opposées l'une à l'autre dans la direction périphérique, au niveau desquelles l'élément de précontrainte (6) vient en prise et exerce la force de précontrainte dans la direction périphérique.

2. Palier lisse (5) selon la revendication 1,
**caractérisé en ce que** l'élément de précontrainte est réalisé sous forme d'élément de ressort (6).

3. Palier lisse (5) selon l'une quelconque des revendications précédentes, **caractérisé en ce que** la bague intérieure (52) est réalisée en plastique, de préférence sous forme de pièce moulée par injection de plastique.

4. Palier lisse (5) selon l'une quelconque des revendications précédentes, **caractérisé en ce que** la bague intérieure (52) présente une fente radiale (54), l'élément de précontrainte (6) surmontant la fente (54) et la resserrant dans la direction périphérique.

5. Palier lisse (5) selon la revendication 4,
**caractérisé en ce que** l'élément de précontrainte (6) est réalisé sous forme de pince et est connecté à la bague intérieure (52) dans la direction axiale.

6. Palier lisse (5) selon l'une quelconque des revendications précédentes, **caractérisé en ce que** la bague intérieure (52) est entourée par une bague extérieure (51).

7. Palier lisse (5) selon la revendication 6,
**caractérisé en ce qu'**entre la bague intérieure (51) et la bague extérieure (52) est disposé au moins un élément de compensation radial (57).

8. Palier lisse (5) selon la revendication 7, **caractérisé en ce que** la bague intérieure (52) est surmoulée avec un matériau élastique.

9. Colonne de direction (1) pour un véhicule automobile, comprenant un arbre de direction (22) supporté de manière rotative, qui est supporté de manière rotative dans au moins un palier lisse (5), comprenant une bague intérieure (52) qui présente une ouverture de palier (53) s'étendant axialement, recevant de manière glissante l'arbre de direction (22), et qui est entourée par une bague extérieure (51),
le palier lisse (5) présentant un élément de précontrainte (6) qui exerce une force de précontrainte sur la bague intérieure (52) et qui serre la bague intérieure (52) sur l'arbre de direction (22),
**caractérisée en ce que**
la bague intérieure (52) présente une fente radiale (54) entre des extrémités périphériques (540) opposées l'une à l'autre dans la direction périphérique, au niveau desquelles l'élément de précontrainte (6) vient en prise et exerce la force de précontrainte dans la direction périphérique.

10. Colonne de direction (1) selon la revendication 9,
**caractérisée en ce que** le palier lisse (5) est réalisé selon l'une quelconque des revendications 2 à 8.

11. Palier lisse (5) pour un arbre de direction (22) d'une colonne de direction (1) pour un véhicule automobile, comprenant une bague intérieure (52) qui présente une ouverture de palier (53) s'étendant axialement pour recevoir de manière glissante l'arbre de direction (22),
dans lequel un dispositif de précontrainte (6) est en liaison fonctionnelle avec la bague intérieure (52), lequel exerce sur la bague intérieure (52) une force de précontrainte resserrant par force l'ouverture de palier (53), pour serrer la bague intérieure (52) sur l'arbre de direction (22), **caractérisé en ce que**
le dispositif de précontrainte (6) présente un dispositif de réglage (7) pour prédéfinir de manière variable la force de précontrainte, la bague intérieure (52) présentant une fente radiale (54) entre des extrémités périphériques (540) opposées l'une à l'autre dans la direction périphérique, au niveau desquelles le dispositif de précontrainte (6) vient en prise.

12. Palier lisse (5) selon l'une quelconque des revendications précédentes, **caractérisé en ce que** le dispositif de réglage présente un entraînement de réglage.

13. Palier lisse (5) selon l'une quelconque des revendications précédentes, **caractérisé en ce que** le dispositif de précontrainte (6) comprend un élément de ressort (961).

14. Palier lisse (5) selon l'une quelconque des revendications précédentes, **caractérisé en ce que** le dispositif de précontrainte (6) présente deux branches de serrage (961) espacées dans la direction périphérique, qui sont connectées aux extrémités périphériques (540).

15. Palier lisse (5) selon la revendication 14,
**caractérisé en ce que** le dispositif de réglage (7) est monté entre les branches de serrage (961).

16. Palier lisse (5) selon l'une quelconque des revendications précédentes, **caractérisé en ce que** le dispositif de réglage (7) présente au niveau de la bague intérieure (52) au moins deux paires différentes de portions d'engagement (560, 570) entre lesquelles peut être monté le dispositif de précontrainte (6, 966) .

17. Palier lisse (5) selon l'une quelconque des revendications précédentes, **caractérisé en ce que** le dispositif de précontrainte (6) comprend une pièce façonnée en tôle de préférence d'une seule pièce, qui comprend une pluralité d'éléments fonctionnels (961, 962, 963, 964, 72).

18. Palier lisse (5) selon l'une quelconque des revendications précédentes, **caractérisé en ce que** la bague intérieure (52) est réalisée en plastique.

19. Palier lisse (5) selon l'une quelconque des revendications précédentes, **caractérisé en ce que** la bague intérieure (52) est entourée par une bague extérieure (51).

20. Colonne de direction (1) pour un véhicule automobile, comprenant un arbre de direction (22) supporté de manière rotative, qui est supporté de manière rotative dans au moins un palier lisse (5), comprenant une bague intérieure (52) qui présente une ouverture de palier (53) s'étendant axialement, recevant de manière glissante l'arbre de direction (22), et qui est entourée par une bague extérieure (51),
le palier lisse (5) présentant au moins un dispositif de précontrainte (6) qui exerce une force de précontrainte sur la bague intérieure (52) et qui serre la bague intérieure (52) sur l'arbre de direction (22),
**caractérisée en ce que**
le dispositif de précontrainte (6) présente un dispositif de réglage (7) pour prédéfinir de manière variable la force de précontrainte, la bague intérieure (52) présentant une fente radiale (54) entre des extrémités périphériques (540) opposées l'une à l'autre dans la direction périphérique, au niveau desquelles l'élément de précontrainte (6) vient en prise et exerce la force de précontrainte dans la direction périphérique.

21. Colonne de direction (1) selon la revendication 20, **caractérisée en ce que** le palier lisse (5) est réalisé selon l'une quelconque des revendications 2 à 8.
